# EUROPEAN PATENT APPLICATION

(11) **EP 4 712 538 A1**
(43) Date of publication of application: **18.03.2026**
(21) Application number: 23935961.5
(22) Date of filing: 06.05.2023
(51) Int. Cl.: H04W 24/02

(54) **WIRELESS COMMUNICATION METHOD, TERMINAL DEVICE, AND NETWORK DEVICE**

(71) Applicant: GUANGDONG OPPO MOBILE TELECOMMUNICATIONS CORP., LTD., Dongguan, Guangdong 523860 (CN)
(72) Inventor: SHEN, Jia, Dongguan, Guangdong 523860 (CN); TIAN, Wenqiang, Dongguan, Guangdong 523860 (CN)
(74) Representative: Taor, Simon Edward William
(86) International application number: PCT/CN2023/092586
(87) International publication number: WO 2024/229632

(57) **Abstract**

A wireless communication method, a terminal device, and a network device, which are beneficial for ensuring the performance of a model. The method comprises: a terminal device receiving target information sent by a network device, wherein the target information is used for determining activation information of artificial intelligence (AI) capabilities corresponding to a plurality of functions or activation information of models corresponding to the plurality of functions.

## Description

### TECHNICAL FIELD

Embodiments of the disclosure relate to the field of communication, in particular to a method for wireless communication, a terminal device and a network device.

### BACKGROUND

In some scenarios, an artificial intelligence (Al) model or a machine learning model is taken into account to implement some functionalities or features of mobile communication processing to achieve certain performance gains.

Therefore, how to manage a model for the functionalities or features to ensure the performance of the model is an urgent problem to be solved.

### SUMMARY

The disclosure provides a method for wireless communication, a terminal device and a network device, which are conducive to ensuring the performance of a model.

In a first aspect, a method for wireless communication is provided, and the method includes the following operation. A terminal device receives target information from a network device. The target information is used to determine activation information of an artificial intelligence (Al) capability corresponding to multiple functionalities or activation information of a model corresponding to the multiple functionalities.

In a second aspect, a method for wireless communication is provided, and the method includes the following operation. A network device sends target information to a terminal device. The target information is used to determine activation information of an artificial intelligence (AI) capability corresponding to multiple functionalities or activation information of a model corresponding to the multiple functionalities.

In a third aspect, a terminal device is provided, and the terminal device is configured to perform the method in the first aspect or implementations thereof.

Specifically, the terminal device includes a functional module for performing the method in the first aspect or implementations thereof.

In a fourth aspect, a network device is provided, and the network device is configured to perform the method in the second aspect or implementations thereof.

Specifically, the network device includes a functional module for performing the method in the second aspect or implementations thereof.

In a fifth aspect, a terminal device is provided, and the terminal device includes a processor and a memory. The memory is configured to store a computer program, and the processor is used to invoke and execute the computer program stored in the memory to perform the method in the first aspect or implementations thereof.

In a sixth aspect, a network device is provided, and the network device includes a processor and a memory. The memory is configured to store a computer program, and the processor is used to invoke and execute the computer program stored in the memory to perform the method in the second aspect or implementations thereof.

In a seventh aspect, a chip is provided, and the chip is configured to implement the method of any one of the first aspect or the second aspect or implementations thereof. Specifically, the chip includes a processor, and the processor is configured to invoke and execute a computer program from a memory to cause a device on which the chip is mounted to perform the method in any one of the first aspect or the second aspect or implementations thereof.

In an eighth aspect, a computer-readable storage medium is provided, and the computer-readable storage medium is configured to store a computer program that causes a computer to perform the method in any one of the first aspect or the second aspect or implementations thereof.

In a ninth aspect, a computer program product is provided, and the computer program product includes computer program instructions that cause a computer to perform the method in any one of the first aspect or the second aspect or implementations thereof.

In a tenth aspect, a computer program is provided. When executed on a computer, the computer program causes the computer to perform the method in any one of the first aspect or the second aspect or implementations thereof.

With the technical solutions described above, the network device may indicate the activation information of the corresponding AI capability or the corresponding model for the multiple functionalities. That is to say, the multiple functionalities may correspond to the activation information of the same AI capability or the same model. Compared with each functionality implemented through an independent model, better key performance indicators (KPI) performance, system throughput and spectral efficiency can be obtained, and the efficiency of model training and data set collection can also be significantly improved at the same time.

### BRIEF DESCRIPTION OF THE DRAWINGS

FIG. 1 is a schematic block diagram of a communication system architecture according to an embodiment of the disclosure.
FIG. 2 is a schematic diagram of connection between neurons in a neural network.
FIG. 3 is a schematic structural diagram of a neural network.
FIG. 4 is a schematic diagram of a convolutional neural network.
FIG. 5 is a schematic structural diagram of a long short-term memory (LSTM) unit.
FIG. 6 is a schematic interaction diagram of a method for wireless communication according to an embodiment of the disclosure.
FIG. 7 to FIG. 22 are schematic diagrams illustrating correspondence relationships between functionalities and models according to embodiments of the disclosure.
FIG. 23 is a schematic block diagram of a terminal device according to an embodiment of the disclosure.
FIG. 24 is a schematic block diagram of a network device according to an embodiment of the disclosure.
FIG. 25 is a schematic block diagram of a communication device according to an embodiment of the disclosure.
FIG. 26 is a schematic block diagram of a chip according to an embodiment of the disclosure.
FIG. 27 is a schematic block diagram of a communication system according to an embodiment of the disclosure.

### DETAILED DESCRIPTION

The technical solutions in the embodiments of the disclosure will be described below with reference to the accompanying drawings in the embodiments of the disclosure. It will be apparent that the described embodiments herein are only part of but not all of the embodiments in the disclosure. For the embodiments in the disclosure, all other embodiments obtained by those of ordinary skilled in the art without making any creative effort shall fall within the scope of protection of the disclosure.

The technical solutions in embodiments of the disclosure can be applied to various communication systems, such as: a global system of mobile communication (GSM) system, a code division multiple access (CDMA) system, a wideband code division multiple access (WCDMA) system, a general packet radio service (GPRS), a long term evolution (LTE) system, an advanced long term evolution (LTE-A) system, a new radio (NR) system, an evolution of NR system, an LTE-based access to unlicensed spectrum (LTE-U) system, an NR-based access to unlicensed spectrum (NR-U) system, a non-terrestrial networks (NTN) system, a universal mobile telecommunication system (UMTS), wireless local area networks (WLAN), wireless fidelity (WiFi), a 5th-generation (5G) system or other communication systems, etc.

Generally, conventional communication systems support a limited number of connections and are easy to be implemented. However, with the development of communication technology, mobile communication systems will support not only conventional communication, but also, for example, device to device (D2D) communication, machine to machine (M2M) communication, machine type communication (MTC), vehicle to vehicle (V2V) communication, or vehicle to everything (V2X) communication, etc. The embodiments of the disclosure may also be applied to these communication systems.

Optionally, the communication systems in the embodiment of the disclosure may be applied to a carrier aggregation (CA) scenario, a dual connectivity (DC) scenario, and a standalone (SA) networking scenario.

Optionally, the communication systems in the embodiment of the disclosure may be applied to an unlicensed spectrum, and the unlicensed spectrum may also be considered to be a shared spectrum. Alternatively, the communication systems in the embodiment of the disclosure may also be applied to a licensed spectrum, and the licensed spectrum may also be considered as a non-shared spectrum.

Various embodiments are described in embodiments of the disclosure in connection with the network device and the terminal device. The terminal device may also be referred to as user equipment (UE), an access terminal, a subscriber unit, a subscriber station, a mobile terminal, a mobile station, a remote station, a remote terminal, a mobile device, a user terminal, a terminal, a wireless communication device, a user agent or a user device, etc.

The terminal device may be a station (ST) in WLAN, which can be a cellular phone, a cordless phone, a session initiation protocol (SIP) phone, a wireless local loop (WLL) station, a personal digital assistant (PDA) device, a handheld device with wireless communication capabilities, a computing device or other processing device connected to a wireless modem, a vehicle-mounted device, a wearable device, a terminal device in a next generation communication system such as an NR network, or a terminal device in a future evolved public land mobile network (PLMN) network.

In embodiments of the disclosure, the terminal device may be deployed on land, including indoor or outdoor, handheld, wearable or vehicle-mounted. The terminal device may also be deployed on the water (such as ships, etc.). The terminal device may also be deployed in the air (e.g. on aircraft, balloons and satellites, etc.).

In embodiments of the disclosure, the terminal device may be a mobile phone, a Pad, a computer with a wireless transceiver function, a virtual reality (VR) terminal device, or an augmented reality (AR) terminal device, a wireless terminal device in industrial control, a wireless terminal device in self driving, a wireless terminal device in remote medical, a wireless terminal device in smart grid, a wireless terminal device in transportation safety, a wireless terminal device in smart city, a wireless terminal device in smart home, and the like.

By way of example and not limitation, in embodiments of the disclosure, the terminal device may also be a wearable device. The wearable device may also be referred to as a wearable smart device, which is a general term of wearable devices that are intelligently designed and developed by applying wearable technologies to daily wear, such as glasses, gloves, watches, clothing and shoes. The wearable device is a portable device that is worn directly on the body or integrated into the user's clothes or accessories. The wearable device is not only a hardware device, but also realizes powerful functions through software support, data interaction and cloud interaction. Generalized wearable smart devices have full functions and large size, and may realize complete or partial functions without relying on smart phones, such as smart watches or smart glasses, as well as those that only focus on a certain type of application functions and need to be used in conjunction with other devices such as smart phones, such as various smart bracelets and smart jewelry for physical sign monitoring.

In embodiments of the disclosure, the network device may be a device for communicating with a mobile device. The network device may be an access point (AP) in WLAN, a base transceiver station (BTS) in GSM or CDMA, a NodeB (NB) in WCDMA, an evolutional Node B (eNB or eNodeB) in LTE, or a relay station or access point, or a vehicle-mounted device, a wearable device, a network device (gNB) in NR networks, a network device in future evolved PLMN networks, a network device in NTN networks, etc.

By way of example and not limitation, in an embodiment of the disclosure, the network device may have mobile characteristics, e.g., the network device may be a mobile device. Optionally, the network device may be a satellite, a balloon station. For example, the satellite may be a low earth orbit (LEO) satellite, a medium earth orbit (MEO) satellite, a geostationary earth orbit (GEO) satellite, a high elliptical orbit (HEO) satellite, or the like. Optionally, the network device may also be a base station installed on land, water and other locations.

In embodiments of the disclosure, the network device may provide services for a cell, the terminal device may communicate with the network device through transmission resources (e.g., frequency domain resources, or spectrum resources) used by the cell. The cell may be a cell corresponding to the network device (e.g., a base station). The cell may belong to a macro base station or a base station corresponding to a small cell. The small cell may be a metro cell, a micro cell, a pico cell, a femto cell, and the like. These small cells have the characteristics of small coverage and low transmission power, and are suitable for providing high-speed data transmission services.

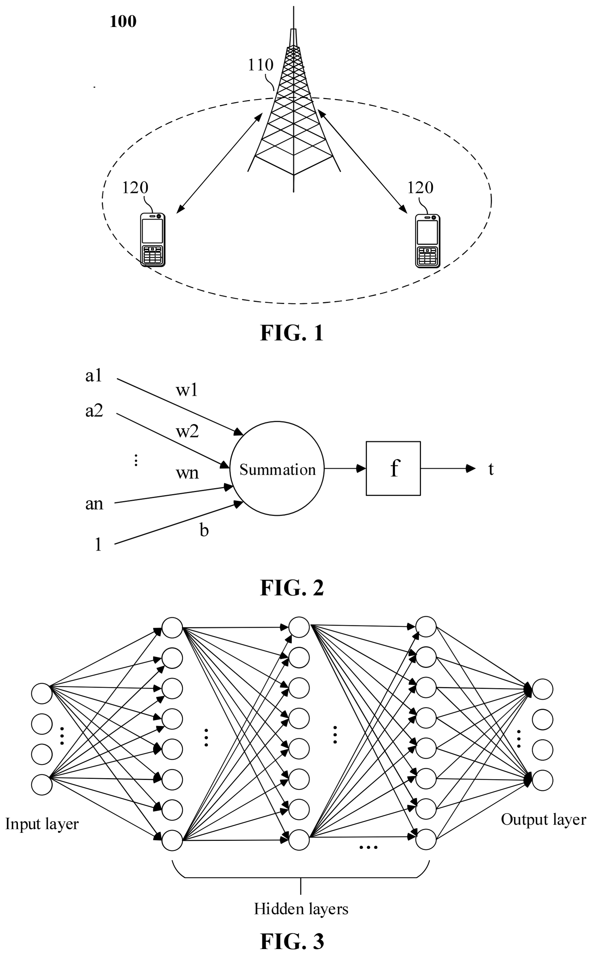

For example, a communication system 100 applied in an embodiment of the disclosure is illustrated in FIG. 1. The communication system 100 may include a network device 110, and the network device 110 may be a device in communication with a terminal device 120 (or referred to as a communication terminal, or a terminal). The network device 110 may provide communication coverage for a particular geographic area and may communicate with the terminal device within that coverage area.

FIG. 1 exemplifies one network device and two terminal devices. Optionally, the communication system 100 may include multiple network devices, and the coverage of each network device may include another number of terminal devices, which is not limited in the embodiment of the disclosure.

Optionally, the communication system 100 may further include other network entities, such as a network controller, a mobility management entity, and the like, which is not limited in the embodiments of the disclosure.

It should be understood that in the embodiment of the disclosure, a device having a communication function in a network/system may be referred to as a communication device. Taking the communication system 100 illustrated in FIG. 1 as an example, the communication device may include a network device 110 and a terminal device 120, both having a communication function, and the network device 110 and the terminal device 120 may be specific devices described above, which will not be described herein. The communication device 100 may also include other devices in the communication system, such as other network entities such as a network controller, a mobility management entity, and the like, which is not limited in the embodiment of the disclosure.

It is to be understood that the terms "system" and "network" are generally used interchangeably herein. In this context, the term "and/or" merely indicates an association relationship for describing associated objects, and represents that there are three kinds of relationships. For example, "A and/or B" may represent three situations, i.e., independent existence of A, existence of both A and B, and independent existence of B. In addition, in this context, the character "/" generally indicates that the anterior and posterior associated objects are in a kind of "or" relationship.

It is to be understood that "indicate/indication" mentioned in the embodiments of the disclosure may be a direct indication, or may be an indirect indication, or may represent that there is an association relationship. For example, A indicates B, which may represent that A indicates B directly, for example, B may be acquired through A; or, may represent A indicate B indirectly, for example, A indicates C, and B may be acquired through C; or may represent that there is an association relationship between A and B.

In the description of the embodiments of the disclosure, the term "correspond/correspondence" may represent that there is a direct or indirect correspondence between the two objects; or, may represent that there is an association relationship between two objects; or, may be a relationship such as indicating and being indicated, configuring and being configured, etc.

In the embodiments of the disclosure, "predefined" may be implemented by storing corresponding codes, tables, or other means which may be used to indicate relevant information in advance within a device (including, for example, a terminal device and a network device), the specific implementation thereof is not limited in the disclosure. For example, "predefined" may be "defined in a protocol".

In an embodiment of the disclosure, the "protocol" may be a standard protocol in the field of communications, and for example, it may include an LTE protocol, an NR protocol, and relevant protocols applied to future communication systems, which are not limited in the disclosure.

For convenience of understanding of the embodiments of the disclosure, the neural network and machine learning related to the disclosure are explained.

A neural network (NN) is a computational model composed of interconnected neuron nodes, where the connections between nodes represent weighted values from input signals to output signals, known as weights. Each node may perform a weighted summation (SUM) of different input signals and output them through a specific activation function (f). FIG. 2 is a schematic diagram of a neuron structure, where, a1, a2, ..., an represent the input signals, w1, w2, ..., wn represent the weights, f represents the activation function, and t represents the output.

A simple neural network, as illustrated in FIG. 3, includes an input layer, hidden layers and an output layer. Through different connection methods, weights and activation functions of multiple neurons, different outputs may be generated, and then a mapping relationship from input to output may be fitted. Each upper-level node is connected to all its lower-level nodes. The neural network is a fully connected neural network, which may also be called a deep neural network (DNN).

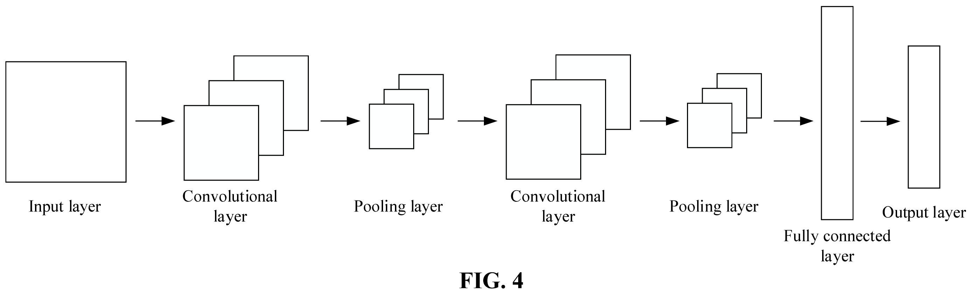

As illustrated in FIG. 4, the basic structure of a convolutional neural network (CNN) includes: an input layer, multiple convolutional layers, multiple pooling layers, a fully connected layer and an output layer. In the convolutional layer, each neuron in the convolutional kernel establishes a local connection with the input of the neuron. By introducing the pooling layer to extract a local maximum or an average feature of a certain layer, the number of network parameters is effectively reduced, and local features are mined. This enables the CNN to converge rapidly and achieve excellent performance.

Deep learning employs deep neural networks with multiple hidden layers, significantly enhancing the network's ability to learn features and enabling it to fit a complex nonlinear mapping from input to output. Consequently, deep learning is widely applied in the fields of speech and image processing. In addition to deep neural networks, for different tasks, deep learning also includes commonly used basic structures such as CNN, recurrent neural network (RNN), and the like.

As illustrated in FIG. 4, the basic structure of a CNN includes: an input layer, multiple convolutional layers, multiple pooling layers, a fully connected layer and an output layer. In the convolutional layer, each neuron in the convolutional kernel establishes a local connection with input of the neuron. By introducing the pooling layer to extract a local maximum or an average feature of a certain layer, the number of network parameters is effectively reduced, and local features are mined. This enables the CNN to converge rapidly and achieve excellent performance.

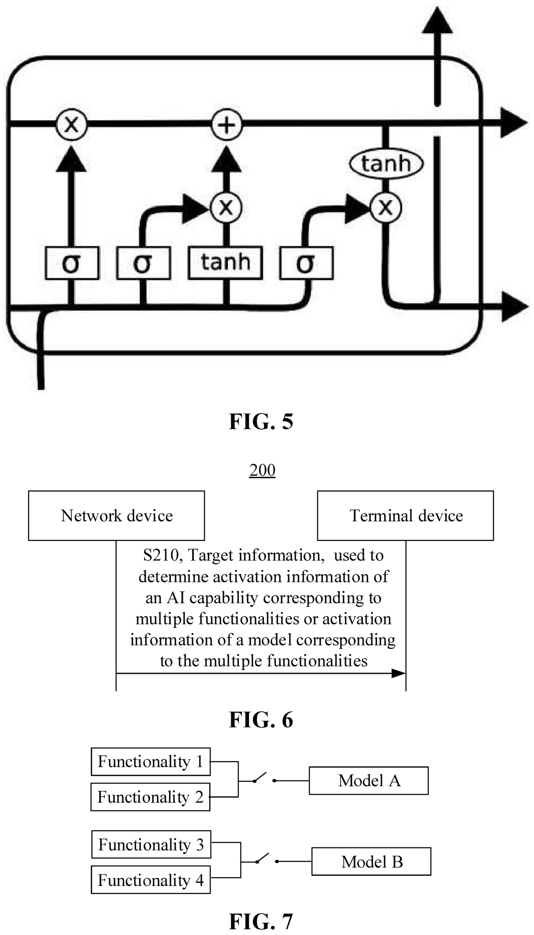

RNN is a neural network that models sequence data and has achieved remarkable success in the field of natural language processing, such as machine translation and speech recognition. Specifically, the network device retains information from previous time points and utilizes it in the computation of the current output. That is to say, the nodes between the hidden layers are no longer unconnected but interconnected, and the input of the hidden layer includes not only the input layer but also the output of the hidden layer from the latest time point. The commonly used RNNs include LSTM network, gated recurrent unit (GRU), or similar structures. FIG. 5 illustrates the structure of a basic LSTM unit, which may incorporate a tanh activation function. Unlike the RNN that only considers the most recent state, the cell state of LSTM will determine which states should be retained and which states should be discarded, thereby addressing the limitations of traditional RNN in long-term memory.

In some scenarios, AI models or ML models are taken into account to implement certain functionalities or features of an air interface. For example, a channel estimation functionality, a channel state information (CSI) feedback (CSI feedback) functionality, and the like.

In some implementations, each functionality or each feature corresponds to one or more AI/ML models, i.e., each functionality or each feature corresponds to an independent AI/ML model. However, in some scenarios, multiple functionalities or multiple features are interrelated. Jointly training an AI/ML model for the multiple functionalities or multiple features may achieve better system performance. For example, jointly training an AI/ML model for the channel estimation functionality and the CSI feedback functionality may achieve better system performance.

In this case, how to manage a model for multiple functionalities or multiple features (such as activation or selection of the model) is an urgent problem to be solved.

For convenience of understanding of technical solutions in the embodiments of the disclosure, the technical solutions in the disclosure are described in detail by way of specific embodiments hereinafter. The following related technologies, as alternatives, may be arbitrarily combined with the technical solutions in the embodiments of the disclosure, all of which belong to the scope of protection of the embodiments of the disclosure. The embodiments of the disclosure include at least some of the following contents.

FIG. 6 is a schematic diagram of a wireless communication method 200 according to an embodiment of the disclosure. As illustrated in FIG. 6, the method 200 includes the following operation.

In operation S210, a terminal device receives target information from a network device. The target information is used to determine activation information of an AI capability corresponding to multiple functionalities or activation information of a model corresponding to the multiple functionalities.

In some embodiments, the operation that the target information is used to determine the activation information of the AI capability or the model corresponding to the multiple functionalities may refer to that:
the target information includes the activation information of the AI capability or the model corresponding to the multiple functionalities; or
the target information includes activation information of an AI capability or a model corresponding to partial functionalities among the multiple functionalities, and activation information of an AI capability or a model corresponding to other functionalities among the multiple functionalities is determined based on the activation information of the AI capability or the model corresponding to the partial functionalities. For example, the activation information of the AI capability or the model corresponding to the other functionalities is the same as the activation information of the AI capability or the model corresponding to the partial functionalities, or there is an association relationship between them.

In some embodiments, the activation information of the AI capability or the model corresponding to the multiple functionalities may be used to indicate whether the AI capability or the model corresponding to the multiple functionalities is activated, and/or indicate an AI capability or a model activated for the multiple functionalities.

For example, the activation information of the AI capability corresponding to the multiple functionalities may include whether the AI capability corresponding to the multiple functionalities is activated, that is, whether an AI algorithm or a model is used for the multiple functionalities.

For another example, the activation information of the model corresponding to multiple functionalities includes whether the model corresponding to the multiple functionalities is activated and/or includes an activated model among the models corresponding to the multiple functionalities, i.e., whether a model is used for the multiple functionalities, and/or which model is used when the models are used. Therefore, the activation of the model may be realized in the embodiment of the disclosure, and when there are multiple models for the multiple functionalities, the selection of the models may also be carried out.

In some embodiments, the target information may be a piece of information. That is to say, the network device may indicate the activation information of the AI capability or the model corresponding to the multiple functionalities via a piece of information.

It is to be understood that the way by which the target information is carried is not limited in the embodiments of the disclosure. For example, the target information may be carried by an existing signaling, specifically such as being carried in a reserved field or a newly added field within the existing signaling. For another example, the target information may be carried by a newly added signaling.

In some embodiments, the target information may be carried by control information, which may be, for example, downlink control information (DCI).

In some embodiments, the target information may be carried by a media access control (MAC) signaling, such as a media access control control element (MAC CE).

In some embodiments, the target information may also be carried by a high-layer signaling, such as a radio resource control (RRC) signaling.

In some embodiments, the target information may be carried by application-layer control information.

In some embodiments, the target information may be carried by DCI; and a format of the DCI, a radio network temporary identity (RNTI), or a field in the DCI may indicate that the DCI is used to carry activation information of an AI capability or a model corresponding to a functionality.

For example, when the DCI is in a first format, it represents that the DCI is used to carry activation information of an AI capability or a model corresponding to a functionality.

For another example, when the DCI is generated by a first RNTI, it represents that the DCI is used to carry activation information of an AI capability or a model corresponding to a functionality.

For another example, an indication field may be added into the DCI to indicate whether the DCI is used to carry activation information of an AI capability or a model corresponding to a functionality. Alternatively, when a value of an existing field in the DCI is a preset value (for example, an invalid value), it represents that the DCI is used to carry activation information of an AI capability or a model corresponding to a functionality.

In the embodiments of the disclosure, a functionality may be replaced with a feature. The following explanation will take the functionality as an example, but the disclosure is not limited thereto.

In some embodiments, a functionality may be a mobile communication processing functionality.

For example, functionalities for mobile communication processing in a terminal device may be divided into multiple mobile communication processing functionalities. The mobile communication processing functionalities may be used to process air interface data and/or high-layer data in mobile communication, and the high-layer may be a MAC layer or an RRC layer.

In some embodiments, the mobile communication processing functionalities may include, but are not limited to, at least one of:
channel estimation, CSI feedback, demodulation, channel decoding, beam management, or wireless positioning.

In a specific embodiment, the channel estimation functionality, the CSI feedback functionality, the demodulation functionality and the channel decoding functionality respectively correspond to one functionality, which are denoted as functionality 1, functionality 2, functionality 3 and functionality 4, respectively.

In some embodiments, one functionality may be one parameter configuration group. In other words, one functionality may be described by a parameter configuration group.

In some embodiments, the parameter configuration group may include one parameter configuration or a group of multiple parameter configurations.

That is, one functionality may be described by one parameter configuration or multiple parameter configurations.

For example, the parameter configuration group may be a combination of an antenna port number configuration and a band parameter configuration.

Exemplary, the parameter configuration group may be a subband-level CSI feedback for 4 antenna ports (i.e., the number of antenna ports is 4, and the band parameter is configured as subband), or a full-band CSI feedback for 2 antenna ports (i.e., the number of antenna ports is 2, and the band parameter is configured as full-band).

For another example, the parameter configuration group may be a combination of a beam number configuration and a spatial domain prediction or time domain prediction configuration of beams.

Exemplary, the parameter configuration group may be spatial domain prediction of 16 beams (i.e., the number of beams is 16, and the beam configuration is a spatial domain prediction configuration), or time domain prediction of 8 beams (i.e., the number of beams is 8, and the beam configuration is a time domain prediction configuration).

In some embodiments, one functionality may be one application scenario. In other words, one functionality may be described by one application scenario.

For example, the application scenario may be a positioning scenario, and different positioning scenarios correspond to different functionalities.

Exemplary, indoor positioning, outdoor positioning, CSI feedback for indoor hotspot channels, CSI feedback for outdoor wide-coverage channels, etc. respectively correspond to different functionalities.

In some embodiments, the AI capability corresponding to the multiple functionalities may refer to whether the multiple functionalities are implemented by using an AI algorithm.

In some embodiments, in a case that the AI capability corresponding to the multiple functionalities is activated, it represents that the AI algorithm is used; otherwise, no AI algorithm is used.

In the embodiments of the disclosure, an AI capability may be replaced with an ML capability.

In some embodiments, the model corresponding to the multiple functionalities may refer to a model for implementing the multiple functionalities, and correspondence relationships between functionalities and models are described hereinafter.

It is to be understood that the type of the model corresponding to the multiple functionalities is not limited in the disclosure. The type of the model corresponding to the multiple functionalities may be, for example, a convolutional neural network model, a recurrent neural network model, a deep learning model, or the like. The disclosure is not limited thereto.

In some embodiments, the multiple functionalities may correspond to one AI capability or one model (in other words, the multiple functionalities may correspond to a same AI capability or a same model). It is denoted as mode 1. In this case, the granularity of the AI capability or the model is multiple functionalities.

Herein, the operation that multiple functionalities correspond to one model may mean that the multiple functionalities may be implemented through one model, or that each of the multiple functionalities may be implemented through the model.

The operation that multiple functionalities correspond to one AI capability may mean that the multiple functionalities adopt a same AI capability. That is to say, the multiple functionalities activate the AI capability, or the multiple functionalities deactivate the AI capability.

In other embodiments, each of the multiple functionalities corresponds to one AI capability or one model (in other words, the multiple functionalities correspond to an independent AI capability or an independent model). It is denoted as mode 2. In this case, the granularity of the AI capability or the model is a functionality.

Herein, the operation that each functionality corresponds to one model may mean that one functionality may be implemented through one model. That is to say, each of the multiple functionalities corresponds to an independent model.

The operation that each functionality corresponds to one AI capability may mean that the multiple functionalities adopt independent AI capabilities. That is to say, the activation or deactivation of AI capabilities corresponding to different functionalities is independent from each other.

In still other embodiments, the multiple functionalities constitute a functionality group (denoted as a first functionality group), and the first functionality group corresponds to one AI capability or one model. It is denoted as mode 3. In this case, the granularity of the AI capability or the model is a functionality group.

In some embodiments, since the model in the mode 1 or the mode 3 requires joint training based on a data set of the multiple functionalities, the complexity of the model implemented by the mode 2 is lower than that of the model implemented by the mode 1 or the mode 3. However, the performance of the model implemented by the mode 1 or the mode 3 is better than that of the model implemented by the mode 2.

In some scenarios, the terminal device only supports that the multiple functionalities correspond to one AI capability or one model.

In this case, the multiple functionalities correspond to one AI capability or one model.

In some scenarios, the terminal device not only supports that the multiple functionalities correspond to one AI capability or one model, but also supports that each of the multiple functionalities corresponds to one AI capability or one model.

In this case, the multiple functionalities may correspond to one AI capability or one model, and each of the multiple functionalities may also correspond to one AI capability or one model. That is to say, the multiple functionalities may be implemented by one AI capability or one model, and each of the multiple functionalities may also be implemented by one AI capability or one model.

In some scenarios, the terminal device only supports that a functionality group constituted by the multiple functionalities corresponds to one AI capability or one model.

In this case, the functionality group constituted by the multiple functionalities corresponds to one AI capability or one model.

In some scenarios, the terminal device not only supports that the functionality group constituted by the multiple functionalities corresponds to one AI capability or one model, but also supports that each of the multiple functionalities corresponds to one AI capability or one model.

In this case, the functionality group constituted by the multiple functionalities may correspond to one AI capability or one model, and each of the multiple functionalities may also correspond to one AI capability or one model. That is to say, the functionality group constituted by the multiple functionalities may be implemented by one AI capability or one model, and each of the multiple functionalities may also be implemented by one AI capability or one model.

In some embodiments, each functionality may be indicated by an identifier, for example, the identifier of the functionality may be the serial number of the functionality.

In some embodiments, a correspondence relationship between the functionality and the identifier may be predefined, or configured by a network device, or determined and notified by a terminal device to a network device. That is to say, the network device and the terminal device have a consistent understanding of the correspondence relationship between the functionality and the identifier.

In some embodiments, each functionality group may be indicated by an identifier, for example, the identifier of the functionality group may be the serial number of the functionality group.

In some embodiments, a correspondence relationship between the functionality group and the identifier may be predefined, or configured by a network device, or determined by a terminal device and notified to a network device after determining the correspondence relationship. That is to say, the network device and the terminal device have a consistent understanding of the correspondence relationship between the functionality group and the identifier.

In some embodiments, the model may be indicated by an identifier, for example, the identifier of the model may be the serial number of the model.

In some embodiments, a correspondence relationship between the model and the identifier may be predefined, or configured by a network device, or determined and notified by a terminal device to a network device. That is to say, the network device and the terminal device have a consistent understanding of the correspondence relationship between the model and the identifier.

In some embodiments, the network device and the terminal device have a consistent understanding of the model corresponding to multiple functionalities.

That is to say, the network device may ascertain the number of candidate modelscorresponding to the multiple functionalities and identify which specific candidate models the multiple functionalities correspond to.

In some embodiments, the correspondence relationships between the multiple functionalities and the models may be configured by the network device, or determined and notified by the terminal device to the network device, or predefined.

Hereinafter, specific implementation of the target information will be described with reference to specific embodiments.

Embodiment 1: the target information includes activation information of an AI capability or a model that is jointly indicated for the multiple functionalities.

In the Embodiment 1, the multiple functionalities may correspond to one AI capability or one model. Therefore, the network device may jointly indicate activation information of the corresponding AI capability or the corresponding model for the multiple functionalities. Herein, the joint indication may mean that the activation information of the AI or the model corresponding to the multiple functionalities is indicated by one piece of information. That is to say, the activation information of the AI capability or the model is for each of the multiple functionalities.

Embodiment 1-1: whether to activate (or use) an AI capability or a model is jointly indicated for multiple functionalities.

In some embodiments, for the scenario in the mode 1, that is, the multiple functionalities correspond to one AI capability or one model (or the multiple functionalities correspond to the same AI capability or the same model), the target information includes first indication information, and the first indication information is used to indicate whether to activate the one AI capability or the one model.

In the Embodiment 1-1, the number of candidate models corresponding to the multiple functionalities is one. In a case that the first indication information indicates that the AI capability is activated, it may be considered that the one candidate model is activated. In a case that the first indication information indicates that the AI capability is deactivated, it may be considered that the one candidate model is deactivated.

Exemplary, the first indication information includes identification information of each of the multiple functionalities and a first activation indication, and the first activation indication is used to indicate whether to activate the one AI capability or the one model. That is to say, the network device may jointly indicate whether to activate the one AI capability or the one model for the multiple functionalities through the first activation indication.

In some embodiments, the identifier information of the functionality may be the serial number of the functionality.

In some embodiments, the first activation indication may be 1 bit, and different values of the 1 bit are used to indicate whether to activate the AI capability or the model corresponding to the multiple functionalities. For example, the value of 1 represents activation, and the value of 0 represents no activation (or deactivation). Alternatively, the value of 0 represents activation, and the value of 1 represents no activation.

Referring to FIG. 7, take the example of multiple functionalities corresponding to one model for illustration. Herein, functionality 1 and functionality 2 correspond to model A, and functionality 3 and functionality 4 correspond to model B.

In this example, the network device may indicate whether the model A is activated for the functionality 1 and the functionality 2 through a piece of indication information, and indicate whether the model B is activated for the functionality 3 and the functionality 4 through a piece of indication information.

Therefore, the embodiments of the disclosure may support the realization of multiple functionalities through one model, and may indicate the activation or deactivation of the model corresponding to the multiple functionalities through a piece of indication information. Compared with each functionality is implemented through an independent model, better KPI performance, system throughput and spectral efficiency can be obtained, and the efficiency of model training and data set collection can also be significantly improved at the same time.

In other embodiments, for the scenario in which the mode 1 and the mode 2 are combined, that is, the multiple functionalities correspond to the same AI capability or the same model, and each of the multiple functionalities may also correspond to an independent AI capability or an independent model, the network device may, through indication information, indicate whether the AI capability or the corresponding model is activated for each functionality, and/or indicate whether the AI capability or the corresponding model is activated for the multiple functionalities.

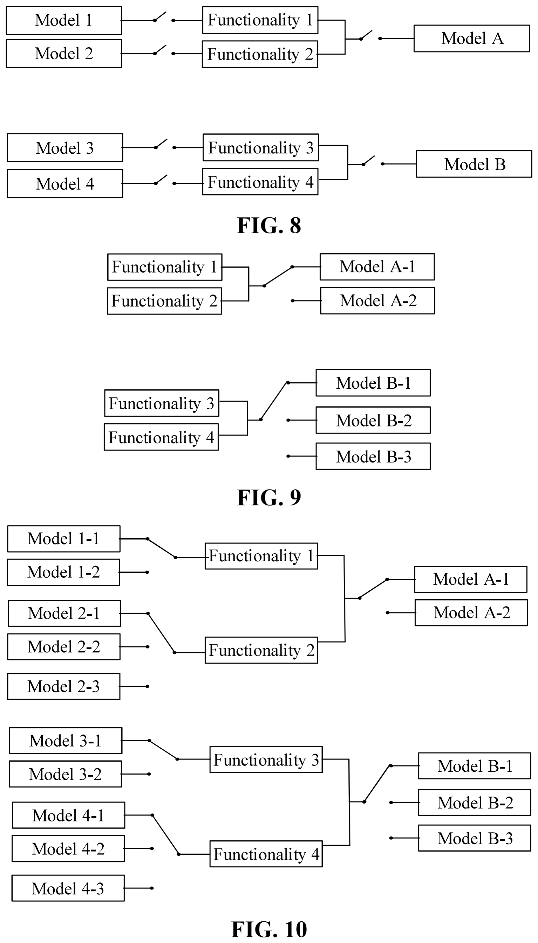

For example, in the scenario illustrated in FIG. 8, the functionality 1 and the functionality 2 correspond to the model A (i.e., the model A may implement the functionality 1 and the functionality 2). The functionality 1 may also correspond to the model 1 (i.e., the model 1 may implement the functionality 1), and the functionality 2 may also correspond to the model 2 (i.e., the model 2 may implement the functionality 2). The functionality 3 and the functionality 4 may correspond to the model B (i.e., the model B may implement the functionality 3 and the functionality 4). The functionality 3 may also correspond to the model 3 (i.e., the model 3 may implement the functionality 3), and the functionality 4 may also correspond to the model 4 (i.e., the model 4 may implement the functionality 4). In this case, the network device may indicate whether the model 1 is activated for the functionality 1 through a piece of indication information, indicate whether the model 2 is activated for the functionality 2 through a piece of indication information, indicate whether the model 3 is activated for the functionality 3 through a piece of indication information, and indicate whether the model 4 is activated for the functionality 4 through a piece of indication information. The network device may also indicate whether the model A is activated for the functionality 1 and the functionality 2 through a piece of indication information, and indicate whether the model B is activated for the functionality 3 and the functionality 4 through a piece of indication information

In some embodiments, a model corresponding to a single functionality or multiple functionalities may be activated by default, or may be deactivated by default.

Optionally, when the network device does not indicate whether to activate a corresponding model for a single functionality or multiple functionalities, the model corresponding to the single functionality or the multiple functionalities may be activated or deactivated by default; alternatively, a status of the model corresponding to the single functionality or the multiple functionalities may remain unchanged, that is, the model remains activated, or the model remains deactivated.

Therefore, the embodiments of the disclosure may support both the realization of multiple functionalities through one model and the realization of one functionality through one model at the same time. In this case, the network device may, through indication information, activate a model corresponding to a single functionality, or activate a model corresponding to multiple functionalities, so that the terminal device may flexibly select either a model with low complexity (the model corresponding to a single functionality) or a model with better performance (that is, the model corresponding to multiple functionalities) based on the indication from the network device.

Embodiment 1-2: the network device jointly indicates the activated target model for multiple functionalities.

Herein, the joint indication may mean that the target model activated for the multiple functionalities is indicated by a piece of information. That is to say, the target model is for each of the multiple functionalities.

In some embodiments, the multiple functionalities correspond to multiple candidate models, each of the multiple candidate models is used to implement the multiple functionalities (that is, there are multiple candidate models that may all implement the multiple functionalities). The target information includes second indication information and/or third indication information. The second indication information is used to indicate whether to activate an AI capability or a model corresponding to the multiple functionalities. The third indication information is used to indicate activation of a target candidate model among the multiple candidate models.

For example, the target information may include second indication information. The second indication information is used to indicate the deactivation of the AI capability or the model corresponding to the multiple functionalities. That is to say, the multiple functionalities are not implemented by the AI algorithm or the model.

For another example, the target information may include third indication information. The second indication information is used to indicate the activation of a target candidate model among the multiple candidate models. That is to say, the multiple functionalities are implemented by the target candidate model.

For yet another example, the target information may include second indication information and third indication information. The second indication information is used to indicate the activation of the AI capability or the model corresponding to the multiple functionalities. The third indication information is used to indicate the activation of the target candidate model among the multiple candidate models.

Exemplary, the second indication information includes identification information of each of the multiple functionalities and a second activation indication. The second activation indication is used to indicate whether to activate the AI capability or the model corresponding to the multiple functionalities. That is to say, the network device may jointly indicate whether to activate the corresponding AI capability or the corresponding model for the multiple functionalities through the second activation indication.

In some embodiments, the second activation indication may be 1 bit, and different values of the 1 bit are used to indicate whether to activate the AI capability or the model corresponding to the multiple functionalities. For example, the value of 1 represents activation, and the value of 0 represents no activation (or deactivation). Alternatively, the value of 0 represents activation, and the value of 1 represents no activation.

Exemplary, the third indication information includes a first model indication. The first model indication is used to indicate the target candidate model.

For example, the first model indication may be identifier information, such as the serial number, of the target candidate model.

In some embodiments, the target candidate model may be selected by the network device from the multiple candidate models, such as selected based on current channel conditions, application scenarios, and the like. Therefore, compared with using a fixed model, the network device selecting a model based on application scenarios enables the selected model to better fit the current scenario and ensures the performance of the model.

Refer to the specific example illustrated in FIG. 9 for detailed explanation. Herein, the functionality 1 and the functionality 2 correspond to a candidate model A-1 or a candidate model A-2, and the functionality 3 and the functionality 4 correspond to a candidate model B-1, a candidate model B-2 or a candidate model B-3. The network device may indicate the target candidate model activated for the functionality 1 and the functionality 2 through a piece of indication information (e.g., the candidate model A-1 is activated), and indicate the target candidate model activated for the functionality 3 and the functionality 4 through a piece of indication information (e.g., the candidate model B-1 is activated). Alternatively, the network device may also indicate that the AI capability is not activated for the functionality 1 and the functionality 2 through a piece of indication information, and indicate that the AI capability is not activated for the functionality 3 and the functionality 4 through a piece of indication information.

Therefore, the embodiments of the disclosure may support the realization of multiple functionalities through one model, and may activate or deactivate the model corresponding to the multiple functionalities through a piece of indication information. Compared with each functionality is implemented through an independent model, better KPI performance, system throughput and spectral efficiency can be obtained, and the efficiency of model training and data set collection can also be significantly improved at the same time. And compared with activating a fixed model, the network device selecting one model from the multiple models enables better adapt to changes in the scenarios and ensures the performance of the model.

In some embodiments, for the scenario in which the mode 1 and the mode 2 are combined, that is, the multiple functionalities correspond to the same AI capability or the same model, and each of the multiple functionalities may also correspond to an independent AI capability or an independent model, the network device may, through indication information, indicate an activated model for each functionality, and/or indicate an activated model for the multiple functionalities.

For example, in the scenario illustrated in FIG. 10, the functionality 1 and the functionality 2 correspond to the candidate model A-1 or the candidate model A-2. The functionality 1 may also correspond to the candidate model 1-1 or the candidate model 1-2, and the functionality 2 may also correspond to the candidate model 2-1, the candidate model 2-2 or the candidate model 2-3. The functionality 3 and the functionality 4 correspond to the candidate model B-1, the candidate model B-2, or the candidate model B-3. The functionality 3 may also correspond to the candidate model 3-1 or the candidate model 3-2, and the functionality 4 may also correspond to the candidate model 4-1, the candidate model 4-2 or the candidate model 4-3.

In this case, the network device may indicate a target candidate model activated for the functionality 1 through a piece of indication information (e.g., the candidate model 1-1 is activated), indicate a target candidate model activated for the functionality 2 through a piece of indication information (e.g., the candidate model 2-1 is activated), indicate a target candidate model activated for the functionality 3 through a piece of indication information (e.g., the candidate model 3-1 is activated), and indicate a target candidate model activated for the functionality 4 through a piece of indication information (e.g., the candidate model 4-1 is activated). The network device may also indicate a target candidate model activated for the functionality 1 and the functionality 2 through a piece of indication information (e.g., the candidate model A-1 is activated), and indicate a target candidate model activated for the functionality 3 and the functionality 4 through a piece of indication information (e.g., the candidate model B-1 is activated).

Therefore, the embodiments of the disclosure may support both the realization of multiple functionalities through one model and the realization of one functionality through one model at the same time. In this case, the network device may, through indication information, indicate a target candidate model activated for a single functionality or multiple functionalities, so that the terminal device may flexibly select either a model with low complexity (the model corresponding to a single functionality) or a model with better performance (that is, the model corresponding to multiple functionalities) based on the indication from the network device. Compared with activating a fixed model, selecting one model from the multiple models enables better adapt to changes in the scenarios and ensures the performance of the model.

Embodiment 2: the target information includes activation information of an AI capability or a model that is indicated for a group of the multiple functionalities.

In the Embodiment 2, the multiple functionalities constitute a functionality group (denoted as a first functionality group), and the first functionality group may correspond to the same AI capability or the same model. In this case, the network device may indicate activation information of the corresponding AI capability or the corresponding model for the first functionality group.

Embodiment 2-1: whether to activate (or use) an AI capability or a model is indicated for a functionality group.

In some embodiments, the first functionality group may correspond to one AI capability or one model. The target information may include fourth indication information, and the fourth indication information is used to indicate whether to activate the one AI capability or the one model.

In the Embodiment 2-1, the number of candidate models corresponding to the first functionality group is one. In a case that the fourth indication information indicates that the AI capability is activated, it may be considered that the one candidate model is activated. In a case that the fourth indication information indicates that the AI capability is deactivated, it may be considered that the one candidate model is deactivated.

Exemplary, the fourth indication information includes identification information of the first functionality group and a third activation indication. The third activation indication is used to indicate whether to activate the one AI capability or the one model corresponding to the first functionality group. That is to say, the network device may indicate whether to activate the one AI capability or the one model for the first functionality group through one third activation indication.

In some embodiments, the identifier information of the first functionality group may be the serial number of the first functionality group.

Optionally, the third activation indication may be 1 bit, and different values of the 1 bit are used to indicate whether to activate the one AI capability or the one model corresponding to the first functionality group. For example, the value of 1 represents activation, and the value of 0 represents no activation. Alternatively, the value of 0 represents activation, and the value of 1 represents no activation.

It is to be understood that the network device and the terminal device have a consistent understanding of functionalities included in the first functionality group. For example, functionalities included in the first functionality group are configured by the network device, or determined and notified by the terminal device to the network device, or predefined. Compared with the Embodiment 1, the Embodiment 2 may activate or deactivate the model for the functionality group without requiring joint indication for the multiple functionalities modules, which is conducive to reducing signaling overhead.

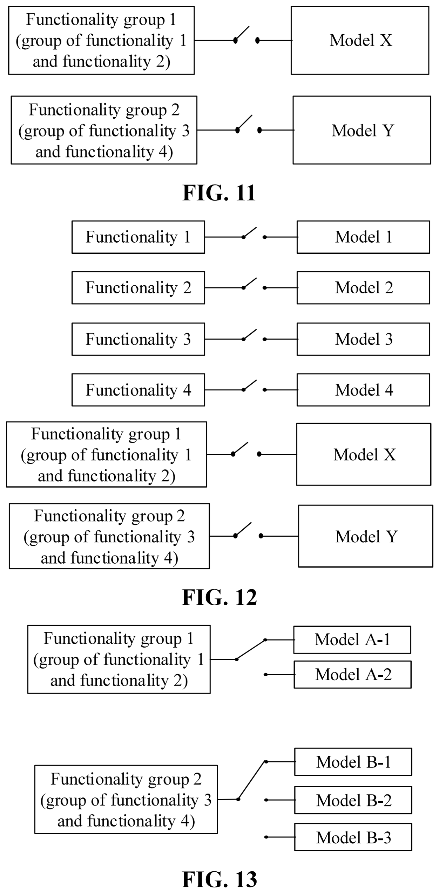

Referring to FIG. 11, take the example of the first functionality group corresponding to one model for illustration. Herein, a functionality 1 and a functionality 2 constitute a functionality group 1 which corresponds to a model X, and a functionality 3 and a functionality 4 constitute a functionality group 2 which corresponds to a model Y. The network device may indicate whether the model X is activated for the functionality group 1 through a piece of indication information, and indicate whether the model Y is activated for the functionality group 2 through a piece of indication information.

Therefore, the embodiments of the disclosure may support the realization of a group of multiple functionalities through one model, and may activate or deactivate the model corresponding to the group of the multiple functionalities through a piece of indication information. Compared with each functionality is implemented through an independent model, better KPI performance, system throughput and spectral efficiency can be obtained, and the efficiency of model training and data set collection can also be significantly improved at the same time.

In some embodiments, for the scenario in which the mode 1 and the mode 2 are combined, that is, the group of the multiple functionalities corresponds to one AI capability or one model, and each of the multiple functionalities may also correspond to one AI capability or one model. The network device may, through indication information, indicate whether the corresponding AI capability or the corresponding model is activated for each functionality, and/or indicate whether the corresponding AI capability or the corresponding model is activated for the group of the multiple functionalities.

For example, in the scenario illustrated in FIG. 12, a functionality 1 and a functionality 2 constitute a functionality group 1 which corresponds to a model X, a functionality 3 and a functionality 4 constitute a functionality group 2 which corresponds to a model Y. The functionality 1 may also correspond to a model 1, the functionality 2 may also correspond to a model 2, the functionality 3 may also correspond to a model 3, and the functionality 4 may also correspond to a model 4. The network device may: indicate whether the model 1 is activated for the functionality 1 through a piece of indication information, indicate whether the model 2 is activated for the functionality 2 through a piece of indication information, indicate whether the model 3 is activated for the functionality 3 through a piece of indication information, and indicate whether the model 4 is activated for the functionality 4 through a piece of indication information. The network device may also: indicate whether the model X is activated for the functionality group 1 through a piece of indication information, and indicate whether the model Y is activated for the functionality group 2 through a piece of indication information.

In some embodiments, a model corresponding to a functionality or a functionality group may be activated by default, or may be deactivated by default.

Optionally, when the network device does not indicate whether to activate a corresponding model for a certain functionality (or a certain functionality group), the model corresponding to the functionality (or the functionality group) may be activated or deactivated by default; alternatively, a status of a model corresponding to the functionality (or the functionality group) may remain unchanged, that is, the model remains activated, or the model remains deactivated.

Therefore, the embodiments of the disclosure may support both the realization of the group of multiple functionalities through one model and the realization of one functionality through one model at the same time. In this case, the network device may, through indication information, activate the model corresponding to a single functionality, or activate the model corresponding to a functionality group, so that the terminal device may flexibly select either a model with low complexity (the model corresponding to a single functionality) or a model with better performance (that is, the model corresponding to a functionality group) based on the indication from the network device.

Embodiment 2-2: an activated (or used) target model is indicated for a functionality group.

In some embodiments, the first functionality group may correspond to multiple candidate models, each of the multiple candidate models is used to implement the first functionality group (that is, there are multiple candidate models that may all implement the first functionality group). The target information may include fifth indication information and/or sixth indication information. The fifth indication information is used to indicate whether to activate an AI capability or a model corresponding to the first functionality group. The sixth indication information is used to indicate activation of a target candidate model among the multiple candidate models.

For example, the target information may include fifth indication information. The fifth indication information is used to indicate the deactivation of the AI capability or the model corresponding to the first functionality group. That is to say, the first functionality group is not implemented by the AI algorithm or the model.

For another example, the target information may include sixth indication information. The sixth indication information is used to indicate the activation of a target candidate model among the multiple candidate models. That is to say, the first functionality group is implemented by the target candidate model.

For yet another example, the target information may include fifth indication information and sixth indication information. The fifth indication information is used to indicate the activation of the AI capability or the model corresponding to the first functionality group (the first functionality group is implemented by using the AI algorithm or the model). The sixth indication information is used to indicate the activation of the target candidate model among the multiple candidate models.

Exemplary, the fifth indication information includes identification information of the first functionality group and a fourth activation indication. The fourth activation indication is used to indicate whether to activate the AI capability or the model corresponding to the first functionality group. That is to say, the network device may jointly indicate whether to activate the AI capability or the model corresponding to the first functionality group through one fourth activation indication.

In some embodiments, the identifier information of the first functionality group may be the serial number of the first functionality group.

In some embodiments, the fourth activation indication may be 1 bit, and different values of the 1 bit are used to indicate whether to activate the AI capability or the model corresponding to the first functionality group. For example, the value of 1 represents activation, and the value of 0 represents no activation. Alternatively, the value of 0 represents activation, and the value of 1 represents no activation.

Exemplary, the sixth indication information includes a second model indication. The second model indication is used to indicate the target candidate model.

For example, the second model indication may be identifier information, such as the serial number, of the target candidate model.

In some embodiments, the target candidate model may be selected by the network device from the multiple candidate models, such as selected based on current channel conditions, application scenarios, and the like. Therefore, compared with using a fixed model, the network device selecting the model based on application scenarios enables the selected model to fit the current scenario and ensures the performance of the model.

Refer to the specific example illustrated in FIG. 13 for detailed explanation. Herein, a functionality 1 and a functionality 2 constitute a functionality group 1 which corresponds to a candidate model A-1 or a candidate model A-2. A functionality 3 and a functionality 4 constitute a functionality group 2 which corresponds to a candidate model B-1, a candidate model B-2 or a candidate model B-3. In this example, the network device may indicate the target candidate model activated for the functionality group 1 through a piece of indication information (e.g., the candidate model A-1 is activated), and indicate the target candidate model activated for the functionality group 2 through a piece of indication information (e.g., the candidate model B-1 is activated). Alternatively, the network device may also indicate that the AI capability or the model is not activated for the functionality group 1 through a piece of indication information, and indicate that the AI capability or the model is not activated for the functionality group 2 through a piece of indication information.

Therefore, the embodiments of the disclosure may support the realization of a group of multiple functionalities through one model, and may activate or deactivate a model corresponding to the group of the multiple functionalities through a piece of indication information. Compared with each functionality is implemented through an independent model, better KPI performance, system throughput and spectral efficiency can be obtained, and the efficiency of model training and data set collection can also be significantly improved at the same time. And compared with activating a fixed model, the network device selecting one model from the multiple models enables better adapt to changes in the scenarios and ensures the performance of the model.

In some scenarios, for the scenario in which the mode 1 and the mode 2 are combined, that is, the group of the multiple functionalities corresponds to one AI capability or one model, and each of the multiple functionalities may also correspond to one AI capability or one model. In this case, the network device may, through indication information, indicate the activated model for each functionality, and/or indicate the activated model for the functionality group.

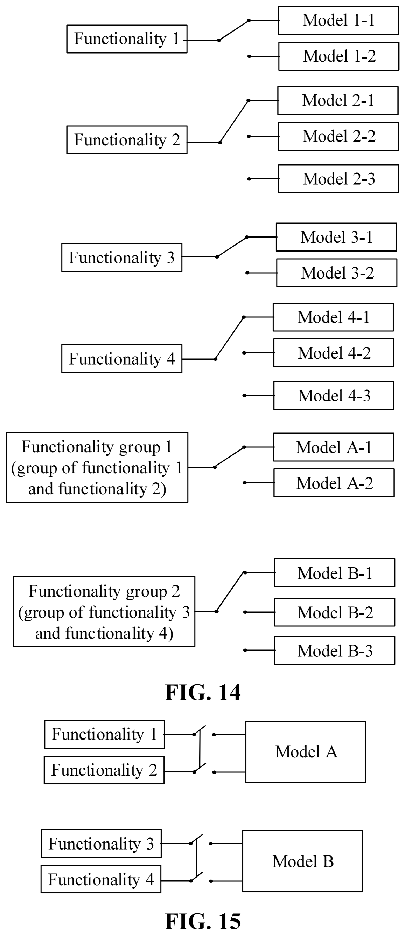

For example, in the scenario illustrated in FIG. 14, a functionality 1 and a functionality 2 constitute a functionality group 1 which corresponds to a candidate model A-1 or a candidate model A-2. A functionality 3 and a functionality 4 constitute a functionality group 2 which corresponds to a candidate model B-1, a candidate model B-2 or a candidate model B-3. The functionality 1 may also correspond to a candidate model 1-1 or a candidate model 1-2. The functionality 2 may also correspond to a candidate model 2-1, a candidate model 2-2 or a candidate model 2-3. The functionality 3 may also correspond to a candidate model 3-1 or a candidate model 3-2. The functionality 4 may also correspond to a candidate model 4-1, a candidate model 4-2 or a candidate model 4-3. In this case, the network device may indicate a target candidate model activated for the functionality 1 through a piece of indication information (e.g., the candidate model 1-1 is activated), indicate a target candidate model activated for the functionality 2 through a piece of indication information (e.g., the candidate model 2-2 is activated), indicate a target candidate model activated for the functionality 3 through a piece of indication information (e.g., the candidate model 3-1 is activated), and indicate a target candidate model activated for the functionality 4 through a piece of indication information (e.g., the candidate model 4-1 is activated). The network device may also: indicate a target candidate model activated for the functionality group 1 through a piece of indication information (e.g., the candidate model A-1 is activated), and indicate a target candidate model activated for the functionality group 2 through a piece of indication information (e.g., the candidate model B-1 is activated).

Therefore, the embodiments of the disclosure may support both the realization of the group of multiple functionalities through one model and the realization of one functionality through one model at the same time. In this case, the network device may, through indication information, indicate a target candidate model activated for a single functionality or a functionality group, so that the terminal device may flexibly select either a model with low complexity or a model with better performance based on the indication from the network device. Compared with activating a fixed model, selecting one model from the multiple models enables better adapt to changes in the scenarios and ensures the performance of the model.

Embodiment 3: the network device indicates activation information of an AI capability or a model corresponding to partial functionalities among the multiple functionalities, and an AI capability or a model corresponding to other functionalities among the multiple functionalities is jointly activated or deactivated.

Compared with the Embodiment 1, in the Embodiment 3, the network device may activate or deactivate the AI capability or the model for the partial functionalities. Accordingly, the AI capability or the model corresponding to other functionalities is jointly activated or deactivated without requiring joint indication for the multiple functionalities, which is conducive to reducing signaling overhead.

In the Embodiment 3, each of the multiple functionalities corresponds to one AI capability or one model; or
the multiple functionalities correspond to one AI capability or one model; or
the multiple functionalities correspond to one AI capability or one model, and each of the multiple functionalities corresponds to one AI capability or one model; or
the multiple functionalities constitute a first functionality group, and the first functionality group corresponds to one AI capability or one model; or
the multiple functionalities constitute a first functionality group, the first functionality group corresponding to one AI capability or one model, or the first functionality group corresponding to one AI capability or one model and each of the multiple functionalities corresponding to one AI capability or one model.

That is to say, correspondence relationships between the multiple functionalities and the AI capabilities or the models may be a scenario of the mode 1 or the mode 2 or the mode 3, or a scenario in a combination of the mode 1 and the mode 2, or a scenario in a combination of the mode 2 and the mode 3.

The specific implementations of the above correspondence relationships refer to the related description of the foregoing embodiments, and for the sake of simplicity, it will not be repeated here.

In some embodiments, the multiple functionalities may correspond to the same model, or there may be association relationships between the models corresponding to the multiple functionalities.

For example, the association relationships between models corresponding to different functionalities among the multiple functionalities are predefined, or configured by the network device, or determined and notified by the terminal device to the network device.

In some embodiments, the network device may send tenth indication information to the terminal device, and the tenth indication information is used to indicate an association relationship between models corresponding to multiple functionalities that are jointly activated.

In some embodiments, the network device may also send ninth indication information to the terminal device to indicate multiple functionalities that are jointly activated. For example, the ninth indication information may include identification information respectively corresponding to the multiple functionalities, and the AI capability or the model corresponding to the multiple functionalities identified by the identification information is jointly activated or deactivated.

In some embodiments, the target information may include seventh indication information, and the seventh indication information may include activation information of an AI capability or a model corresponding to partial functionalities among the multiple functionalities.

For example, the seventh indication information is used to indicate whether to activate the AI capability or the model corresponding to the partial functionalities among the multiple functionalities and/or indicate a model activated for the partial functionalities.

In some embodiments, the multiple functionalities may include a first functionality and a second functionality. The first functionality and the second functionality correspond to a same AI capability or a same model, or there is an association relationship between a model corresponding to the first functionality and a model corresponding to the second functionality.

Exemplary, the seventh indication information includes identification information of the first functionality and a fifth activation indication. The fifth activation indication is used to indicate whether to activate the AI capability or the model corresponding to the first functionality. This example may be applied to a scenario in which the first functionality corresponds to one candidate model. When the fifth activation indication is used to indicate activation of the AI capability or the model corresponding to the first functionality, the terminal device may determine that the AI capability or the model corresponding to the second functionality is also activated.

Exemplary, the seventh indication information includes identification information of the first functionality and a third model indication, and the third model indication is used to indicate an AI capability or a model activated for the first functionality.

This case may be applied to a scenario in which the first functionality corresponds to multiple candidate models. The network device may indicate a target candidate model activated for the first functionality through the seventh indication information. Furthermore, the terminal device may determine a target candidate model activated for the second functionality. The target candidate model corresponding to the second functionality and the target candidate model corresponding to the first functionality may be the same one, or there is an association relationship between the two target candidate models.

As an example, the seventh indication information includes identification information of the first functionality, a fifth activation indication and a third model indication. The fifth activation indication is used to indicate whether to activate an AI capability or a model corresponding to the first functionality, and the third model indication is used to indicate a model activated for the first functionality.

This case may be applied to a scenario in which the first functionality corresponds to multiple candidate models. The network device may indicate activation of the AI capability corresponding to the first functionality through the fifth activation indication, and indicate the target candidate model activated for the first functionality through the third model indication. Furthermore, the terminal device may determine a target candidate model activated for the second functionality. The target candidate model corresponding to the second functionality and the target candidate model corresponding to the first functionality may be the same one, or there is an association relationship between the two target candidate models.

In some embodiments, for the scenario in which the mode 1 and the mode 2 are combined or the mode 2 and the mode 3 are combined, that is, each of the multiple functionalities may also correspond to an independent AI capability or an independent model. In this case, the target information may further include eighth indication information, and the eighth indication information is used to indicate whether to activate an AI capability or a model corresponding to each of at least one of the multiple functionalities and/or indicate a target model activated for each functionality.

Embodiment 3-1: a corresponding AI capability or model is indicated to be activated or deactivated for partial functionalities among the multiple functionalities, and accordingly, the corresponding AI functionality or model corresponding to other functionalities among the multiple functionalities is also activated or deactivated. That is to say, the AI capabilities or the models corresponding to the multiple functionalities are jointly activated or deactivated. Herein, the multiple functionalities correspond to a same AI capability or a same model, or there are correlation relationships between the models corresponding to the multiple functionalities.

For example, in a case that the target information indicates that an AI capability or a model corresponding to partial functionalities among the multiple functionalities is not activated, the terminal device determines that an AI capability or a model corresponding to other functionalities among the multiple functionalities is also not activated.

For another example, in a case that the target information indicates that an AI capability or a model corresponding to partial functionalities among the multiple functionalities is activated, the terminal device determines that an AI capability or a model corresponding to other functionalities among the multiple functionalities is also activated.

In some embodiments, the multiple functionalities may include a first functionality and a second functionality. In a case that the network device indicates that an AI capability or a model corresponding to the first functionality is activated, an AI capability or a model corresponding to the second functionality is also activated. In a case that the network device indicates that the AI capability or the model corresponding to the first functionality is not activated, the AI capability or the model corresponding to the second functionality is also not activated.

Case 1: multiple functionalities correspond to a same model.

In some embodiments, for the scenario of mode 1, that is, the multiple functionalities correspond to one AI capability or one model, if the target information indicates that an AI capability or a first model is activated or deactivated for the first functionality among the multiple functionalities, the AI capability or the first model is activated or deactivated for all other functionalities other than the first functionality.

For example, in the example of FIG. 15, a functionality 1 and a functionality 2 correspond to a model A, a functionality 3 and a functionality 4 correspond to a model B. When the network device indicates that the model A is activated for the functionality 1, the terminal device may determine that the model A is also activated for the functionality 2. Alternatively, when the network device indicates that the model A is deactivated for the functionality 1, the terminal device may determine that the model A is also deactivated for the functionality 2. Alternatively, when the network device indicates that the model B is activated for the functionality 3, the terminal device may determine that the model B is also activated for the functionality 4. Alternatively, when the network device indicates that the model B is activated for the functionality 3, the terminal device may determine that the model B is also activated for the functionality 4.

In some embodiments, for the scenario in which the mode 1 and the mode 2 are combined, that is, the multiple functionalities correspond to one AI capability or one model, and each of the multiple functionalities may also correspond to an independent AI capability or an independent model, if the target information indicates that the AI capability or the first model is activated or deactivated for the first functionality among the multiple functionalities, the AI capability or the first model is activated or deactivated for all other functionalities other than the first functionality.

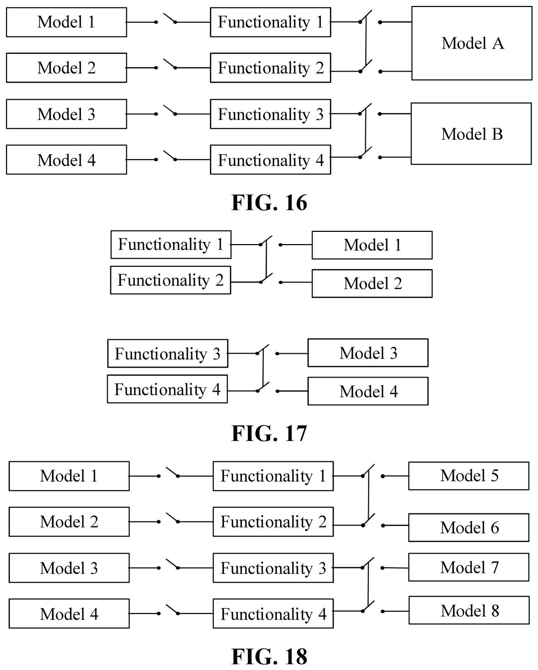

For example, in the example of FIG. 16, a functionality 1 and a functionality 2 correspond to a model A, and a functionality 3 and a functionality 4 correspond to a model B. The functionality 1 may also correspond to a model 1, the functionality 2 may also correspond to a model 2, the functionality 3 may also correspond to a model 3, and the functionality 4 may also correspond to a model 4. The network device may indicate the activation or deactivation of the model 1 for the functionality 1 through a piece of indication information, indicate the activation or deactivation of the model 2 for the functionality 2 through a piece of indication information, indicate the activation or deactivation of the model 3 for the functionality 3 through a piece of indication information, and indicate the activation or deactivation of the model 4 is activated for the functionality 4 through a piece of indication information. The network device may also indicate the activation or deactivation of the model A for the functionality 1 through a piece of indication information, and in this case, the terminal device may determine the activation or deactivation of the model A for the functionality 2. The network device may also indicate the activation or deactivation of the model B for the functionality 3 through a piece of indication information, and in this case, the terminal device may determine the activation or deactivation of the model B for the functionality 4.

Optionally, the network device may also indicate to the terminal devices via indication information that when the AI capability or the model is activated or deactivated for the functionality 1, the AI capability or the model is also activated or deactivated for the functionality 2.

Optionally, the network device may also indicate to the terminal devices via indication information that when the AI capability or the model is activated or deactivated for the functionality 3, the AI capability or the model is also activated or deactivated for the functionality 4.

In some embodiments, for the scenario of the mode 3, that is, the multiple functionalities constitute the first functionality group which corresponds to one AI capability or one model, if the target information indicates that the AI capability or the first model is activated for the first functionality among the multiple functionalities, the AI capability or the first model is activated for all other functionalities other than the first functionality.

Case 2: there are correlation relationships between models corresponding to multiple functionalities

In some embodiments, for the scenario of the mode 2, that is, each of the multiple functionalities corresponds to an independent AI capability or an independent model. There are association relationships between the AI capabilities or the models corresponding to different functionalities among the multiple functionalities. If the target information indicates that an AI capability is activated or deactivated for the second functionality among the multiple functionalities, the AI capability is activated or deactivated for all other functionalities other than the second functionality. Alternatively, if the target information indicates that a second model is activated or deactivated for the second functionality among the multiple functionalities, the models associated with the second model are activated or deactivated for all other functionalities other than the second functionality.

For example, in the example of FIG. 17, a functionality 1 corresponds to a model 1, a functionality 2 corresponds to a model 2, a functionality 3 corresponds to a model 3, and a functionality 4 corresponds to a model 3. Herein, there is an association relationship between the model 1 and the model 2, and there is an association relationship between the model 3 and the model 4. When the network device indicates that the model 1 is activated for the functionality 1, the terminal device may determine that the model 2 is activated for the functionality 2. Alternatively, when the network device indicates that the model 1 is deactivated for the functionality 1, the terminal device may determine that the model 2 is deactivated for the functionality 2. Alternatively, when the network device indicates that the model 3 is activated for the functionality 3, the terminal device may determine that the model 4 is activated for the functionality 4. Alternatively, when the network device indicates that the model 3 is deactivated for the functionality 3, the terminal device may determine that the model 4 is deactivated for the functionality 4.

For another example, for the scenario in which mode 1 and mode 2 are combined, as illustrated in FIG. 18, a functionality 1 corresponds to a model 1, a functionality 2 corresponds to a model 2, a functionality 3 corresponds to a model 3, and a functionality 4 corresponds to a model 4. The functionality 1 and the functionality 2 may also respectively correspond to a model 5 and a model 6, and there is an association relationship between the model 5 and the model 6. The functionality 3 and the functionality 4 may also respectively correspond to a model 7 and a model 8, and there is an association relationship between the model 7 and the model 8, The network device may: indicate the activation or deactivation of the model 1 for the functionality 1 through a piece of indication information, indicate the activation or deactivation of the model 2 for the functionality 2 through a piece of indication information, indicate the activation or deactivation of the model 3 for the functionality 3 through a piece of indication information, and indicate the activation or deactivation of the model 4 is activated for the functionality 4 through a piece of indication information. The network device may also indicate the activation or deactivation of the model 5 for the functionality 1 through a piece of indication information, and in this case, the terminal device may determine the activation or deactivation of the model 6 for the functionality 2. The network device may also indicate the activation or deactivation of the model 7 for the functionality 3 through a piece of indication information, and in this case, the terminal device may determine the activation or deactivation of the model 8 for the functionality 4.

Optionally, the network device may also indicate to the terminal devices via indication information that when an AI capability or a model is activated or deactivated for the functionality 1, the AI capability or the model is also activated or deactivated for the functionality 2.

Optionally, the network device may also indicate to the terminal devices via indication information that when an AI capability or a model is activated or deactivated for the functionality 3, the AI capability or the model is also activated or deactivated for the functionality 4.

Embodiment 3-2: a model is indicated to be activated or deactivated for partial functionalities among the multiple functionalities, and accordingly, the same or associated model is activated or deactivated for other functionalities among the multiple functionalities.

In some embodiments, the target information may include eleventh indication information, and the eleventh indication information is used to indicate a target model activated for a first functionality among the multiple functionalities. The terminal device may determine a target model activated for a second functionality based on the eleventh indication information. Herein, the first functionality and the second functionality correspond to a same AI capability or a same model, or there is an association relationship between the model corresponding to the first functionality and the model corresponding to the second functionality. The first functionality corresponds to the multiple candidate models.

In some embodiments, the first functionality and the second functionality may be considered to be associated functionalities. For example, a channel estimation functionality and a CSI feedback functionality are associated functionalities.

Case 1: associated functionalities correspond to a same model.

In this case, when the network device indicates that a first model is activated for the first functionality, the first model is also activated for the second functionality.

In some embodiments, for the scenario of the mode 1, the network device may indicate an activated target model for partial functionalities among the multiple functionalities. Accordingly, the same model is activated for other functionalities among the multiple functionalities.

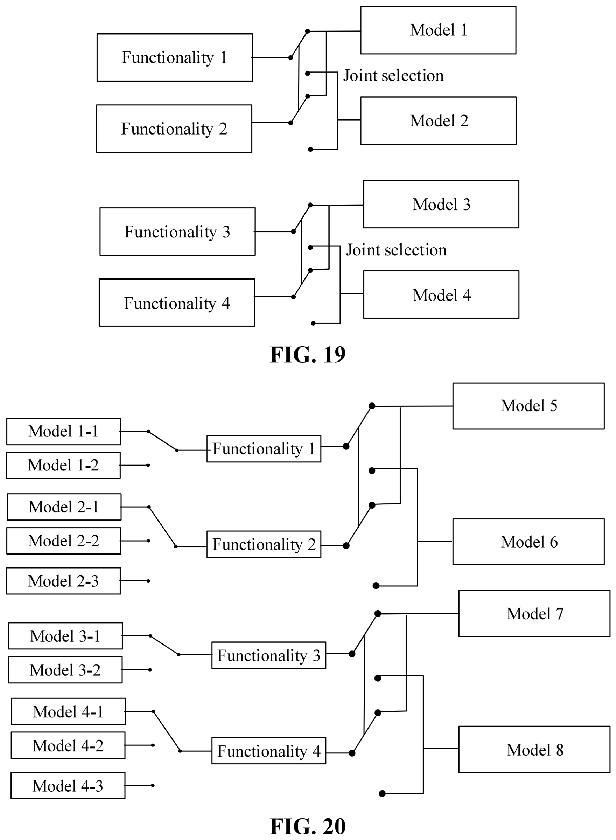

For example, in the example of FIG. 19, a functionality 1 corresponds to a model 1 and a model 2, a functionality 2 corresponds to a model 1 and a model 2, a functionality 3 corresponds to a model 3 and a model 4, and a functionality 4 corresponds to a model 3 and a model 4. Herein, the functionality 1 and the functionality 2 are associated functionalities, while the functionality 3 and the functionality are associated functionalities. When the network device indicates that the model 1 is activated for the functionality 1, the terminal device may determine that the model 1 is also activated for the functionality 2. Alternatively, when the network device indicates that the model 2 is activated for the functionality 1, the terminal device may determine that the model 2 is also activated for the functionality 2. Alternatively, when the network device indicates that the model 3 is activated for the functionality 3, the terminal device may determine that the model 3 is also activated for the functionality 4. Alternatively, when the network device indicates that the model 4 is activated for the functionality 3, the terminal device may determine that the model 4 is also activated for the functionality 4.

In some embodiments, for the scenario in which the mode 1 and the mode 2 are combined, the network device may indicate an activated target model for partial functionalities among the multiple functionalities, and/or may indicate an activated target model for each of the multiple functionalities.

For example, in the example of FIG. 20, a functionality 1 corresponds to a model 1-1 or a model 1-2, a functionality 2 corresponds to a model 2-1, a model 2-2 or a model 2-3, a functionality 3 corresponds to a model 3-1 or a model 3-2, and a functionality 4 corresponds to a model 4-1, a model 4-2 or a model 4-3. The functionality 1 and the functionality 2 (or a group of the functionality 1 and the functionality 2) may also correspond to a model 5 or a model 6. The functionality 3 and the functionality 4 (or a group of the functionality 3 and the functionality 4) may also correspond to a model 7 or a model 8. The network device may, through a piece of indication information, indicate a target model activated for the functionality 1 among the model 1-1 and the model 1-2 (e.g. the model 1-1). The network device may, through a piece of indication information, indicate a target model activated for the functionality 2 among the model 2-1, the model 2-2, and the model 2-3 (e.g. the model 2-3). The network device may, through a piece of indication information, indicate a target model activated for the functionality 3 among the model 3-1 and the model 3-2 (e.g. the model 3-1). The network device may, through a piece of indication information, indicate a target model activated for the functionality 4 among the model 4-1, the model 4-2, and the model 4-3 (e.g. the model 4-1). The network device may also, through a piece of indication information, indicate a target model activated for the functionality 1 among the model 5 and the model 6 (e.g. the model 5), in which case the terminal device may determine that the same model is also activated for the functionality 2. The network device may also, through a piece of indication information, indicate a target model activated for the functionality 3 among the model 7and the model 8 (e.g. the model 7), in which case the terminal device may determine that the same model is also activated for the functionality 4.

Case 2: associated functionalities correspond to different models, and there is an association relationship between the corresponding models.

In this case, when the network device indicates that a first model is activated for the first functionality, a model associated with the first model is activated for the second functionality.

In some embodiments, for the scenario of the mode 2, the network device may indicate an activated target model for partial functionalities among the multiple functionalities. Accordingly, the associated model is activated for other functionalities among the multiple functionalities.

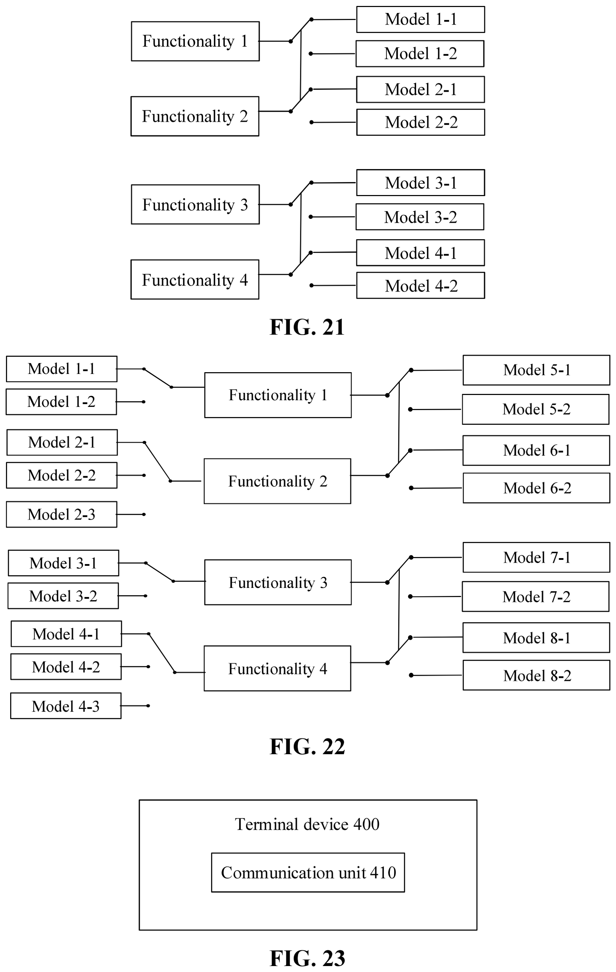

For example, in the example of FIG. 21, a functionality 1 corresponds to a model 1-1 or a model 1-2, a functionality 2 corresponds to a model 2-1 or a model 2-2. Herein, there is an association relationship between the model 1-1 and the model 2-1, and there is an association relationship between the model 1-2 and the model 2-2. A functionality 3 corresponds to a model 3-1 or a model 3-2, a functionality 4 corresponds to a model 4-1 or a model 4-2. Herein, there is an association relationship between the model 3-1 and the model 4-1, and there is an association relationship between the model 3-2 and the model 4-2. When the network device indicates that the model 1-1 is activated for the functionality 1, the terminal device may determine that the model 2-1 is activated for the functionality 2. Alternatively, when the network device indicates that the model 1-2 is activated for the functionality 1, the terminal device may determine that the model 2-2 is activated for the functionality 2. Alternatively, when the network device indicates that the model 3-1 is activated for the functionality 3, the terminal device may determine that the model 4-1 is activated for the functionality 4. Alternatively, when the network device indicates that the model 3-2 is activated for the functionality 3, the terminal device may determine that the model 4-2 is activated for the functionality 4.

For another example, in the example of FIG. 22, a functionality 1 corresponds to a model 1-1 or a model 1-2, a functionality 2 corresponds to a model 2-1, a model 2-2, or a model 2-3, a functionality 3 corresponds to a model 3-1 or a model 3-2, a functionality 4 corresponds to a model 4-1, a model 4-2 or a model 4-3. In addition, the functionality 1 corresponds to a model 5-1 or a model 5-2, and the functionality 2 corresponds to a model 6-1 or a model 6-2. Herein, there is an association relationship between the model 5-1 and the model 6-1, and there is an association relationship between the model 5-2 and the model 6-2. The functionality 3 corresponds to a model 7-1 or a model 7-2, and the functionality 4 corresponds to a model 8-1 or a model 8-2. Herein, there is an association relationship between the model 7-1 and the model 8-1, and there is an association relationship between the model 7-2 and the model 8-2. The network device may, through a piece of indication information, indicate a target model activated for the functionality 1 among the model 1-1 and the model 1-2 (e.g. the model 1-1). The network device may, through a piece of indication information, indicate a target model activated for the functionality 2 among the model 2-1, the model 2-2, and the model 2-3 (e.g. the model 2-1). The network device may, through a piece of indication information, indicate a target model activated for the functionality 3 among the model 3-1 and the model 3-2 (e.g. the model 3-1). The network device may, through a piece of indication information, indicate a target model activated for the functionality 4 among the model 4-1, the model 4-2, and the model 4-3 (e.g. the model 4-1). The network device may also, through a piece of indication information, indicate a target model activated for the functionality 1 among the model 5-1 and the model 5-2, in which case the terminal device may determine that the associated model is activated for the functionality 2. For example, if the network device indicates that the model 5-1 is activated for the functionality 1, the terminal device determines that the model 6-1 is activated for the functionality 2. Alternatively, if the network device indicates that the model 5-2 is activated for the functionality 1, the terminal device determines that the model 6-2 is activated for the functionality 2. The network device may also, through a piece of indication information, indicate a target model activated for the functionality 3 among the model 7-1 and the model 7-2. In this case, the terminal device may determine that the associated model is activated for the functionality 4. For example, if the network device indicates that the model 7-1 is activated for the functionality 3, the terminal device determines that the model 8-1 is activated for the functionality 4. Alternatively, if the network device indicates that the model 7-2 is activated for the functionality 3, the terminal device determines that the model 8-2 is activated for the functionality 4.

Therefore, the embodiments of the disclosure may support the realization of a single functionality, multiple functionalities, or a group of multiple functionalities through one model. The network device may, through a piece of indication information, activate a target model for a single functionality or partial functionalities among the multiple functionalities or partial functionalities among the functionality group. Furthermore, for other functionalities, the terminal device may activate the same model or a model associated with the target model, so that the terminal device may flexibly select either a model with low complexity or a model with better performance. Compared with activating a fixed model, selecting one model from the multiple models enables better adapt to changes in the scenarios and ensures the performance of the model.

To sum up, in the embodiments of the disclosure, multiple functionalities may be implemented by using a same AI capability or a same model. The network device may, through a piece of information, indicate the activation information of the AI capability or the model corresponding to the multiple functionalities. Compared with each functionality is implemented through an independent model, better KPI performance, system throughput and spectral efficiency can be obtained, and the efficiency of model training and data set collection can also be significantly improved at the same time.

Furthermore, when the multiple functionalities or the group of the multiple functionalities correspond(s) to the multiple candidate models, the network device may indicate the target candidate model among the multiple candidate models. Compared with activating a fixed model, selecting one model from the multiple models enables better adapt to changes in the scenarios and ensures the performance of the model.

The method embodiments of the disclosure are described in detail above in conjunction with FIG. 6 to FIG. 22. The apparatus embodiments of the disclosure will be described in detail below in conjunction with FIG. 23 to FIG. 27. It is to be understood that the apparatus embodiments correspond to the method embodiments, and similar descriptions may refer to the method embodiments for reference.

FIG. 23 illustrates a schematic block diagram of a terminal device 400 according to an embodiment of the disclosure. As illustrated in FIG. 23, the terminal device 400 includes a communication unit 410.

The communication unit 410 is configured to receive target information from a network device. The target information determines activation information of an AI capability corresponding to multiple functionalities or activation information of a model corresponding to the multiple functionalities.

In some embodiments, the multiple functionalities may correspond to one AI capability or one model; or
the multiple functionalities may correspond to one AI capability or one model and each of the multiple functionalities may correspond to one AI capability or one model.

In some embodiments, the target information may include activation information of an AI capability or a model that is jointly indicated for the multiple functionalities.

In some embodiments, the multiple functionalities may correspond to one AI capability. The target information may include first indication information, and the first indication information is used to indicate whether to activate the one AI capability.

In some embodiments, the first indication information may include identification information of each of the multiple functionalities and a first activation indication, and the first activation indication is used to indicate whether to activate the one AI capability.

In some embodiments, the multiple functionalities may correspond to multiple candidate models, and each of the multiple candidate models is used to implement the multiple functionalities. The target information may include second indication information and/or third indication information. The second indication information is used to indicate whether to activate an AI capability corresponding to the multiple functionalities. The third indication information is used to indicate activation of a target candidate model among the multiple candidate models.

In some embodiments, the second indication information may include identification information of each of the multiple functionalities and a second activation indication. The second activation indication is used to indicate whether to activate the AI capability corresponding to the multiple functionalities.

In some embodiments, the third indication information may include a first model indication. The first model indication is used to indicate the target candidate model.

In some embodiments, the multiple functionalities may constitute a first functionality group. The first functionality group may correspond to one AI capability or one model, or the first functionality group may correspond to one AI capability or one model and each of the multiple functionalities corresponds to one AI capability or one model.

In some embodiments, the target information may include activation information of an AI capability or a model corresponding to the first functionality group.

In some embodiments, the first functionality group may correspond to one AI capability. The target information may include fourth indication information, and the fourth indication information is used to indicate whether to activate the one AI capability.

In some embodiments, the fourth indication information may include identification information of the first functionality group and a third activation indication. The third activation indication is used to indicate whether to activate the corresponding one AI capability for the first functionality group.

In some embodiments, the first functionality group may correspond to multiple candidate models. Each of the multiple candidate models is used to implement the first functionality group. The target information may include fifth indication information and/or sixth indication information. The fifth indication information is used to indicate whether to activate an AI capability corresponding to the first functionality group, and the sixth indication information is used to indicate activation of a target candidate model among the multiple candidate models.

In some embodiments, the fifth indication information may include identification information of the first functionality group and a fourth activation indication. The fourth activation indication is used to indicate whether to activate the AI capability corresponding to the first functionality group.

In some embodiments, the sixth indication information may include identification information of the first functionality group and a second model indication. The second model indication is used to indicate the target candidate model.

In some embodiments, each of the multiple functionalities may correspond to one AI capability or one model; or
the multiple functionalities may correspond to one AI capability or one model; or
the multiple functionalities may correspond to one AI capability or one model and each of the multiple functionalities may correspond to one AI capability or one model; or
the multiple functionalities may constitute a first functionality group. Herein, the first functionality group corresponds to one AI capability or one model, or the first functionality group corresponds to one AI capability or one model and each of the multiple functionalities corresponds to one AI capability or one model.

In some embodiments, the terminal device may further include a processing unit.

The processing unit is configured to, in a case that the target information indicates that an AI capability or a model corresponding to partial functionalities among the multiple functionalities is not activated, determine that an AI capability or a model corresponding to other functionalities among the multiple functionalities is either not activated; or
the processing unit is configured to, in a case that the target information indicates that an AI capability or a model corresponding to partial functionalities among the multiple functionalities is activated, determine that an AI capability or a model corresponding to other functionalities among the multiple functionalities is also activated.

In some embodiments, the terminal device may further include a processing unit.

The processing unit is configured to, in a case that the target information indicates that an AI capability or a first model is activated for a first functionality among the multiple functionalities, the multiple functionalities correspond to a same AI capability or a same model, or the multiple functionalities constitute a first functionality group and the first functionality group corresponds to one AI capability or one model, determine that the AI capability or the first model is activated for functionalities other than the first functionality.

In some embodiments, the multiple functionalities may include a second functionality, and the terminal device may further include a processing unit.

The processing unit is configured to, in a case that the target information indicates that an AI capability or a second model is activated for the second functionality among the multiple functionalities, and each of the multiple functionalities corresponds to one AI capability or one model, determine that the AI capability or a model associated with the second model is activated for functionalities other than the second functionality.

In some embodiments, there may be association relationships between AI capabilities or models corresponding to different functionalities among the multiple functionalities, and the association relationships may be predefined or configured by the network device.

In some embodiments, the target information may include seventh indication information, the seventh indication information including activation information of an AI capability or a model corresponding to partial functionalities among the multiple functionalities.

In some embodiments, the seventh indication information is used to indicate whether to activate the AI capability or the model corresponding to the partial functionalities among the multiple functionalities and/or indicate an AI capability or a model activated for the partial functionalities.

In some embodiments, the multiple functionalities may include a first functionality.

The seventh indication information includes identification information of the first functionality and a fifth activation indication, the fifth activation indication being used to indicate whether to activate an AI capability or a model corresponding to the first functionality; or
the seventh indication information includes identification information of the first functionality and a third model indication, the third model indication being used to indicate an AI capability or a model activated for the first functionality; or
the seventh indication information includes identification information of the first functionality, a fifth activation indication and a third model indication, the fifth activation indication being used to indicate whether to activate an AI capability or a model corresponding to the first functionality, and the third model indication being used to indicate an AI capability or a model activated for the first functionality.

In some embodiments, in a case that the terminal device supports that the multiple functionalities correspond to one AI capability or one model and each of the multiple functionalities corresponds to one AI capability or one model, or the terminal device supports that a group of the multiple functionalities corresponds to one AI capability or one model and each of the multiple functionalities corresponds to one AI capability or one model, the target information may further include eighth indication information. The eighth indication information is used to indicate activation information of an AI capability or a model respectively for at least one of the multiple functionalities.

In some embodiments, the eighth indication information is used to indicate whether to activate the AI capability or the model respectively corresponding to each of the at least one functionality and/or indicate a target model activated for each of the at least one functionality.

In some embodiments, the target information may be carried by at least one of the following signaling: downlink control information (DCI), media access control control element (MAC CE), high-layer signaling, or application-layer control information.

In some embodiments, the target information may be carried by the DCI. The DCI may be in a first format, and/or the DCI may be generated by a first radio network temporary identity (RNTI). The DCI in the first format is used to carry activation information of an AI capability or a model corresponding to a functionality, and the DCI generated by the first RNTI is used to carry activation information of an AI capability or a model corresponding to a functionality.

Optionally, in some embodiments, the communication unit may be a communication interface or a transceiver, or an input/output interface of a communication chip or a system-on-chip. The processing unit may be one or more processors.

It is to be understood that the terminal device 400 in the embodiments of the disclosure, may correspond to the terminal device in the method embodiments of the disclosure. Furthermore, the aforementioned and other operations and/or functions of each unit in the terminal device 400 are respectively implemented to realize the corresponding procedures of the terminal device in the method 200 illustrated in FIG. 6 to FIG. 22. For brevity, details will not be repeated herein again.

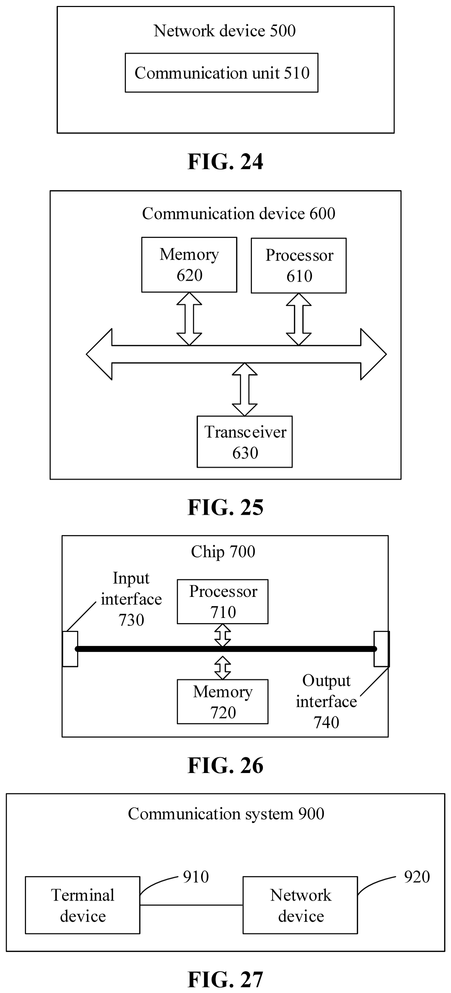

FIG. 24 is a schematic block diagram of a network device according to an embodiment of the disclosure. The network device 500 of FIG. 24 includes a communication unit 510.

The communication unit 510 is configured to send target information to a terminal device. The target information determines activation information of an AI capability corresponding to multiple functionalities or activation information of a model corresponding to the multiple functionalities.

In some embodiments, the multiple functionalities may correspond to one AI capability or one model; or
the multiple functionalities may correspond to one AI capability or one model and each of the multiple functionalities may correspond to one AI capability or one model.

In some embodiments, the target information may include activation information of an AI capability or a model that is jointly indicated for the multiple functionalities.

In some embodiments, the multiple functionalities may correspond to one AI capability. The target information may include first indication information, and the first indication information is used to indicate whether to activate the one AI capability.

In some embodiments, the first indication information may include identification information of each of the multiple functionalities and a first activation indication, and the first activation indication is used to indicate whether to activate the one AI capability.

In some embodiments, the multiple functionalities may correspond to multiple candidate models, and each of the multiple candidate models is used to implement the multiple functionalities. The target information may include second indication information and/or third indication information. The second indication information is used to indicate whether to activate an AI capability corresponding to the multiple functionalities. The third indication information is used to indicate activation of a target candidate model among the multiple candidate models.

In some embodiments, the second indication information may include identification information of each of the multiple functionalities and a second activation indication. The second activation indication is used to indicate whether to activate the AI capability corresponding to the multiple functionalities.

In some embodiments, the third indication information may include a first model indication. The first model indication is used to indicate the target candidate model.

In some embodiments, the multiple functionalities may constitute a first functionality group. The first functionality group may correspond to one AI capability or one model, or the first functionality group may correspond to one AI capability or one model and each of the multiple functionalities corresponds to one AI capability or one model.

In some embodiments, the target information may include activation information of an AI capability or a model corresponding to the first functionality group.

In some embodiments, the first functionality group may correspond to one AI capability. The target information includes fourth indication information, and the fourth indication information is used to indicate whether to activate the one AI capability.

In some embodiments, the fourth indication information may include identification information of the first functionality group and a third activation indication. The third activation indication is used to indicate whether to activate the corresponding one AI capability for the first functionality group.

In some embodiments, the first functionality group may correspond to multiple candidate models. Each of the multiple candidate models is used to implement the first functionality group. The target information includes fifth indication information and/or sixth indication information. The fifth indication information is used to indicate whether to activate an AI capability corresponding to the first functionality group, and the sixth indication information is used to indicate activation of a target candidate model among the multiple candidate models.

In some embodiments, the fifth indication information may include identification information of the first functionality group and a fourth activation indication. The fourth activation indication is used to indicate whether to activate the AI capability corresponding to the first functionality group.

In some embodiments, the sixth indication information may include identification information of the first functionality group and a second model indication. The second model indication is used to indicate the target candidate model.

In some embodiments, each of the multiple functionalities may correspond to one AI capability or one model; or
the multiple functionalities may correspond to one AI capability or one model; or
the multiple functionalities may correspond to one AI capability or one model and each of the multiple functionalities may correspond to one AI capability or one model; or
the multiple functionalities may constitute a first functionality group. Herein, the first functionality group corresponds to one AI capability or one model, or the first functionality group corresponds to one AI capability or one model and each of the multiple functionalities corresponds to one AI capability or one model.

In some embodiments, the communication unit 510 is further configured to:
send ninth indication information to the terminal device. The indication information is used to indicate the multiple functionalities that are jointly activated.

In some embodiments, the ninth indication information may include identification information corresponding to each of the multiple functionalities.

In some embodiments, the communication unit 510 is further configured to:
send tenth indication information to the terminal device. The tenth indication information is used to indicate an association relationship between models corresponding to the multiple functionalities that are jointly activated.

In some embodiments, the target information may include seventh indication information, the seventh indication information including activation information of an AI capability or a model corresponding to partial functionalities among the multiple functionalities.

In some embodiments, the seventh indication information is used to indicate whether to activate the AI capability or the model corresponding to the partial functionalities among the multiple functionalities and/or indicate an AI capability or a model activated for the partial functionalities.

In some embodiments, the multiple functionalities may include a first functionality.

The seventh indication information includes identification information of the first functionality and a fifth activation indication, the fifth activation indication being used to indicate whether to activate an AI capability or a model corresponding to the first functionality; or
the seventh indication information includes identification information of the first functionality and a third model indication, the third model indication being used to indicate an AI capability or a model activated for the first functionality; or
the seventh indication information includes identification information of the first functionality, a fifth activation indication and a third model indication, the fifth activation indication being used to indicate whether to activate an AI capability or a model corresponding to the first functionality, and the third model indication being used to indicate an AI capability or a model activated for the first functionality.

In some embodiments, in a case that the terminal device supports that the multiple functionalities correspond to one AI capability or one model and each of the multiple functionalities corresponds to one AI capability or one model, or the terminal device supports that a group of the multiple functionalities corresponds to one AI capability or one model and each of the multiple functionalities corresponds to one AI capability or one model, the target information may further include eighth indication information. The eighth indication information is used to indicate activation information of an AI capability or a model respectively for at least one of the multiple functionalities.

In some embodiments, the eighth indication information is used to indicate whether to activate the AI capability or the model respectively corresponding to each of the at least one functionality and/or indicate a target model activated for each of the at least one functionality.

In some embodiments, the target information may be carried by at least one of the following signaling: downlink control information (DCI), media access control control element (MAC CE), high-layer signaling, or application-layer control information.

In some embodiments, the target information may be carried by the DCI. The DCI may be in a first format, and/or the DCI may be generated by a first radio network temporary identity (RNTI). The DCI in the first format is used to carry activation information of an AI capability or a model corresponding to a functionality, and the DCI generated by the first RNTI is used to carry activation information of an AI capability or a model corresponding to a functionality.

Optionally, in some embodiments, the communication unit may be a communication interface or a transceiver, or an input/output interface of a communication chip or a system-on-chip. The processing unit may be one or more processors.

It is to be understood that the network device 500 in the embodiments of the disclosure, may correspond to the network device in the method embodiments of the disclosure. Furthermore, the aforementioned and other operations and/or functions of each unit in the network device 500 are respectively implemented to realize the corresponding procedures of the network device in the method 200 illustrated in FIG. 6 to FIG. 22. For brevity, details will not be repeated herein again.

FIG. 25 is a schematic structural illustration of a communication device 600 according to an embodiment of the disclosure. The communication device 600 illustrated in FIG. 25 includes a processor 610 that may invoke and execute a computer program from a memory to implement each of the methods in the embodiments of the disclosure.

Optionally, as illustrated in FIG. 25, the communication device 600 may further include a memory 620. The processor 610 may invoke and execute a computer program from the memory 620 to implement each of the methods in the embodiments of the disclosure.

The memory 620 may be a separate device independent of the processor 610, or may be integrated in the processor 610.

Optionally, as illustrated in FIG. 25, the communication device 600 may further include a transceiver 630, and the processor 610 may control the transceiver 630 to communicate with other devices. Specifically, the transceiver may transmit information or data to other devices, or receive information or data from other devices.

The transceiver 630 may include a transmitter and a receiver. The transceiver 630 may further include one or more antennas.

In an embodiment, the communication device 600 may specifically be the network device in the embodiments of the disclosure, and the communication device 600 may implement corresponding processes implemented by the network device in each of the methods in the embodiments of the disclosure. For brevity, details will not be repeated herein again.

In an embodiment, the communication device 600 may specifically be the mobile terminal/the terminal device in the embodiments of the disclosure, and the communication device 600 may implement corresponding processes implemented by the mobile terminal/the terminal device in each of the methods in the embodiments of the disclosure. For brevity, details will not be repeated herein again

FIG. 26 is a schematic structural diagram of a chip according to an embodiment of the disclosure. The chip 700 illustrated in FIG. 26 includes a processor 710 that may invoke and execute a computer program from a memory to implement each of the methods in the embodiments of the disclosure.

Optionally, as illustrated in FIG. 26, the chip 700 may further include a memory 720. The processor 710 may invoke and execute a computer program from the memory 720 to implement each of the methods in the embodiments of the disclosure.

The memory 720 may be a separate device independent of the processor 710, or may be integrated in the processor 710.

Optionally, the chip 700 may further include an input interface 730. The processor 710 may control the input interface 730 to communicate with other devices or chips. Specifically, the input interface 1230 may acquire information or data from other devices or chips.

Optionally, the chip 700 may further include an output interface 740. The processor 710 may control the output interface 740 to communicate with other devices or chips. Specifically, the output interface 90 may output information or data to other devices or chips.

Optionally, the chip may be applied to the network device in the embodiments of the disclosure, and the chip may implement corresponding processes implemented by the network device in each of the methods in the embodiments of the disclosure. For brevity, details will not be repeated herein again.

Optionally, the chip may be applied to the mobile terminal/the terminal device in the embodiments of the disclosure, and the chip may implement corresponding processes implemented by the mobile terminal/the terminal device in each of the methods in the embodiments of the disclosure. For brevity, details will not be repeated herein again.

It is to be understood that the chip mentioned in the embodiments of the disclosure may also be referred to as a system-level chip, a system chip, a chip system, or a system-on-chip, etc.

FIG. 27 is a schematic block diagram of a communication system 900 according to an embodiment of the disclosure. As illustrated in FIG. 27, the communication system 900 includes a terminal device 910 and a network device 920.

The terminal device 910 may be configured to implement the corresponding functions implemented by the terminal device in the foregoing method, and the network device 920 may be configured to implement the corresponding functions implemented by the network device in the foregoing method. For brevity, details will not be repeated herein again.

It is to be understood that the processor in the embodiment of the disclosure may be an integrated circuit chip with a signal processing capability. In implementation, the operations of the above method embodiments may be accomplished by an integrated logic circuit of the hardware in the processor or the instructions in the form of software. The processor described above may be a general-purpose processor, a digital signal processor (DSP), an application specific integrated circuit (ASIC), a field programmable gate array (FPGA) or another programmable logic device, a discrete gate or transistor logic device, or a discrete hardware component. Various methods, operations and logic block diagrams disclosed in the embodiments of the disclosure may be implemented or performed. The general-purpose processor may be a microprocessor, or may be any conventional processor or the like. The operations of the methods disclosed in the embodiments of the disclosure may be directly embodied to be executed and completed by a hardware decoding processor, or by a combination of hardware and software modules in the decoding processor. The software module may be located in a mature storage medium in the field, such as a random access memory, a flash memory, a read-only memory, a programmable read-only memory, or an electrically erasable programmable memory, a register, etc. The storage medium is located in the memory, and the processor reads information in the memory and completes the operations of the foregoing method in combination with its hardware.

It is understood that in the embodiment of the disclosure, the memory may be a volatile memory or a non-volatile memory, or may include both a volatile memory and a non-volatile memory. The non-volatile memory may be a read-only memory (ROM), a programmable ROM (PROM), an erasable PROM (EPROM), an electrically EPROM (EEPROM), or a flash memory. The volatile memory may be a random access memory (RAM), which serves as an external cache. It is exemplarily but unlimitedly described that RAMs in various forms may be adopted, such as a static RAM (SRAM), a dynamic RAM (DRAM), a synchronous DRAM (SDRAM), a double data rate SDRAM (DDR SDRAM), an enhanced SDRAM (ESDRAM), a synch link DRAM (SLDRAM) and a direct rambus RAM (DRRAM). It is to be noted that each of the memories of the systems and methods described herein are intended to include, but not limited to, memories of these and any other suitable types.

It is to be understood that each of the aforementioned memories is described only exemplarily rather than limitedly. For example, the memory in the embodiment of the disclosure may further be an SRAM, a DRAM, an SDRAM, a DDR SDRAM, an ESDRAM, an SLDRAM and a DR RAM, etc. That is to say, the memories in the embodiments of the disclosure are intended to include, but not limited to, memories of these and any other suitable types.

In the embodiment of the disclosure, a computer-readable storage medium for storing a computer program is further provided.

In an embodiment, the computer-readable storage medium may be applied to the network device in the embodiments of the disclosure, and the computer program is executed to enable a computer to execute corresponding processes implemented by the network device in each of the methods in the embodiments of the disclosure. For brevity, details will not be repeated herein again.

Optionally, the computer-readable storage medium may be applied to the mobile terminal/the terminal device in the embodiments of the disclosure, and the computer program is executed to enable the computer to execute corresponding processes implemented by the mobile terminal/the terminal device in each of the methods in the embodiments of the disclosure. For brevity, details will not be repeated herein again.

In the embodiment of the disclosure, a computer program product including computer program instructions is further provided.

In an embodiment, the computer program product may be applied to the network device in the embodiments of the disclosure, and the computer program instructions are executed to enable the computer to execute corresponding processes implemented by the network device in each of the methods in the embodiments of the disclosure. For brevity, details will not be repeated herein again.

Optionally, the computer program product may be applied to the mobile terminal/the terminal device in the embodiments of the disclosure, and the computer program instructions cause the computer to execute corresponding processes implemented by the mobile terminal/the terminal device in each of methods in the embodiments of the disclosure. For brevity, details will not be repeated herein again.

In the embodiment of the disclosure, a computer program is further provided.

In an embodiment, the computer program may be applied to the network device in the embodiments of the disclosure. The computer program that, when executed by a computer, causes the computer to execute corresponding processes implemented by the network device in each of methods in the embodiments of the disclosure. For brevity, details will not be repeated herein again.

In an embodiment, the computer program may be applied to the mobile terminal/the terminal device in the embodiments of the disclosure. The computer program that, when executed by a computer, causes the computer to execute corresponding processes implemented by the mobile terminal/the terminal device in each of methods in the embodiments of the disclosure. For brevity, details will not be repeated herein again.

Those of ordinary skilled in the art may appreciate that the units and algorithmic operations of each of the examples described in the embodiments disclosed herein may be implemented in electronic hardware, or a combination of computer software and electronic hardware. Whether these functions are performed in hardware or software depends on the specific application and design constraints of the technical solutions. The professionals may use different methods to implement the described functions for each specific application, and such implementations shall not be considered as going beyond the scope of the disclosure.

Those skilled in the art may clearly understand that, for the specific working processes of the systems, devices, and units described above, reference may be made to the corresponding processes in the aforementioned method embodiments, which will not be repeated herein for convenience and conciseness of the description.

In several embodiments provided in the disclosure, it is to be understood that the disclosed systems, devices, and methods may be implemented in other ways. For example, the device embodiments described above are only schematic. For example, the partition of the unit is only a kind of logical functional partition, and other partition manners may be adopted during practical implementation. For example, multiple units or components may be combined or integrated into another system, or some features may be omitted or not implemented. In addition, coupling or direct coupling or communication connection between various displayed or discussed components may be indirect coupling or communication connection, implemented through some interfaces, devices or units, and may be an electrical or mechanical connection or in other forms.

The units described as separate components may or may not be physically separate, and the components displayed as units may or may not be physical units, that is, they may be located in one place or may be distributed to multiple network units. Part or all of the units may be selected based on the actual needs to achieve the purpose of the solution of the present embodiment.

In addition, various functional units in the embodiments of the disclosure may be integrated into one processing unit, or they may be physically exist separately as individual units, or two or more units may be integrated into one unit.

The functions may be stored in a computer readable storage medium if implemented in the form of software functional units and sold or used as a stand-alone product. Based on such understanding, the essential part of the technical solutions of the disclosure or a part of the technical solutions that contributes to the related art or the part of the technical solutions may be embodied in a form of a software product. The software product is stored in a storage medium and includes instructions which cause a computer device (which may be a personal computer, a server, or a network device, etc.) to perform all or part of the operations in the methods described in various embodiments of the disclosure. The foregoing storage medium includes various media capable of storing program codes, such as a USB disk, a mobile hard disk, an ROM, an RAM, a magnetic disk, an optical disk, or the like.

The above is only the specific implementations of the disclosure; however, the scope of protection of the disclosure is not limited thereto. Variations or replacements which can be readily conceived by those skilled in the art within the technical scope disclosed by the disclosure shall fall within the scope of protection of the disclosure. Therefore, the scope of protection of the disclosure shall be determined by the scope of protection of the claims.

## Claims

1. A method for wireless communication, comprising:
receiving, by a terminal device, target information from a network device, wherein the target information is used to determine activation information of an artificial intelligence (AI) capability corresponding to a plurality of functionalities or activation information of a model corresponding to the plurality of functionalities.

2. The method of claim 1, wherein
the plurality of functionalities correspond to one AI capability or one model; or
the plurality of functionalities correspond to one AI capability or one model and each of the plurality of functionalities corresponds to one AI capability or one model.

3. The method of claim 1 or 2, wherein the target information comprises activation information of an AI capability or a model that is jointly indicated for the plurality of functionalities.

4. The method of any one of claims 1 to 3, wherein the plurality of functionalities correspond to one AI capability, the target information comprises first indication information, the first indication information being used to indicate whether to activate the one AI capability.

5. The method of claim 4, wherein the first indication information comprises identification information of each of the plurality of functionalities and a first activation indication, the first activation indication being used to indicate whether to activate the one AI capability.

6. The method of any one of claims 1 to 3, wherein the plurality of functionalities correspond to a plurality of candidate models, each of the plurality of candidate models is used to implement the plurality of functionalities, the target information comprises second indication information and/or third indication information, wherein the second indication information is used to indicate whether to activate an AI capability corresponding to the plurality of functionalities, and the third indication information is used to indicate activation of a target candidate model among the plurality of candidate models.

7. The method of claim 6, wherein the second indication information comprises identification information of each of the plurality of functionalities and a second activation indication, the second activation indication being used to indicate whether to activate the AI capability corresponding to the plurality of functionalities.

8. The method of claim 6 or 7, wherein the third indication information comprises a first model indication, the first model indication being used to indicate the target candidate model.

9. The method of claim 1, wherein the plurality of functionalities constitute a first functionality group,
wherein the first functionality group corresponds to one AI capability or one model, or
the first functionality group corresponds to one AI capability or one model and each of the plurality of functionalities corresponds to one AI capability or one model.

10. The method of claim 9, wherein the target information comprises activation information of an AI capability or a model corresponding to the first functionality group.

11. The method of claim 10, wherein the first functionality group corresponds to one AI capability, the target information comprises fourth indication information, the fourth indication information being used to indicate whether to activate the one AI capability.

12. The method of claim 11, wherein the fourth indication information comprises identification information of the first functionality group and a third activation indication, the third activation indication being used to indicate whether to activate the one AI capability.

13. The method of claim 10, wherein the first functionality group corresponds to a plurality of candidate models, each of the plurality of candidate models is used to implement the first functionality group, the target information comprises fifth indication information and/or sixth indication information, wherein the fifth indication information is used to indicate whether to activate an AI capability corresponding to the first functionality group, and the sixth indication information is used to indicate activation of a target candidate model among the plurality of candidate models.

14. The method of claim 13, wherein the fifth indication information comprises identification information of the first functionality group and a fourth activation indication, the fourth activation indication being used to indicate whether to activate the AI capability corresponding to the first functionality group.

15. The method of claim 13 or 14, wherein the sixth indication information comprises a second model indication, the second model indication being used to indicate the target candidate model.

16. The method of claim 1, wherein
each of the plurality of functionalities corresponds to one AI capability or one model; or the plurality of functionalities correspond to one AI capability or one model; or
the plurality of functionalities correspond to one AI capability or one model and each of the plurality of functionalities corresponds to one AI capability or one model; or
the plurality of functionalities constitute a first functionality group, the first functionality group corresponds to one AI capability or one model, or the first functionality group corresponds to one AI capability or one model and each of the plurality of functionalities corresponds to one AI capability or one model.

17. The method of claim 16, further comprising:
in a case that the target information indicates that an AI capability or a model corresponding to partial functionalities among the plurality of functionalities is not activated, determining that an AI capability or a model corresponding to other functionalities among the plurality of functionalities is either not activated; or
in a case that the target information indicates that an AI capability or a model corresponding to partial functionalities among the plurality of functionalities is activated, determining that an AI capability or a model corresponding to other functionalities among the plurality of functionalities is also activated.

18. The method of claim 16 or 17, further comprising:
in response to the target information indicating that an AI capability or a first model is activated for a first functionality among the plurality of functionalities, in a case that the plurality of functionalities correspond to a same AI capability or a same model, or the plurality of functionalities constitute a first functionality group and the first functionality group corresponds to one AI capability or one model, determining that the AI capability or the first model is activated for functionalities other than the first functionality.

19. The method of any one of claims 16 to 18, wherein the plurality of functionalities comprises a second functionality, and the method further comprises:
in response to the target information indicating that an AI capability or a second model is activated for the second functionality among the plurality of functionalities, and each of the plurality of functionalities corresponds to one AI capability or one model, determining that the AI capability or a model associated with the second model is activated for functionalities other than the second functionality.

20. The method of claim 19, wherein there are association relationships between AI capabilities or models corresponding to different functionalities among the plurality of functionalities, and the association relationships are predefined or configured by the network device.

21. The method of any one of claims 16 to 20, wherein the target information comprises seventh indication information, the seventh indication information comprising activation information of an AI capability or a model corresponding to partial functionalities among the plurality of functionalities.

22. The method of claim 21, wherein the seventh indication information is used to indicate whether to activate the AI capability or the model corresponding to the partial functionalities among the plurality of functionalities and/or indicate an AI capability or a model activated for the partial functionalities.

23. The method of claim 21 or 22, wherein the plurality of functionalities comprises a first functionality,
wherein the seventh indication information comprises identification information of the first functionality and a fifth activation indication, the fifth activation indication being used to indicate whether to activate an AI capability or a model corresponding to the first functionality; or
the seventh indication information comprises identification information of the first functionality and a third model indication, the third model indication being used to indicate an AI capability or a model activated for the first functionality; or
the seventh indication information comprises identification information of the first functionality, a fifth activation indication and a third model indication, wherein the fifth activation indication is used to indicate whether to activate an AI capability or a model corresponding to the first functionality, and the third model indication is used to indicate an AI capability or a model activated for the first functionality.

24. The method of any one of claims 1 to 23, wherein
in a case that the terminal device supports that the plurality of functionalities correspond to one AI capability or one model and each of the plurality of functionalities corresponds to one AI capability or one model, or the terminal device supports that a group of the plurality of functionalities corresponds to one AI capability or one model and each of the plurality of functionalities corresponds to one AI capability or one model, the target information further comprises eighth indication information, the eighth indication information being used to indicate activation information of an AI capability or a model respectively for at least one of the plurality of functionalities.

25. The method of claim 24, wherein the eighth indication information is used to indicate whether to activate the AI capability or the model respectively corresponding to each of the at least one functionality and/or indicate a target model activated for each of the at least one functionality.

26. The method of any one of claims 1 to 25, wherein the target information is carried by at least one of the following signaling: downlink control information (DCI), a media access control control element (MAC CE), a high-layer signaling, or application-layer control information.

27. The method of claim 26, wherein the target information is carried by the DCI,
wherein the DCI is in a first format, and/or the DCI is generated by a first radio network temporary identity (RNTI),
wherein the DCI in the first format is used to carry activation information of an AI capability or a model corresponding to a functionality, and the DCI generated by the first RNTI is used to carry activation information of an AI capability or a model corresponding to a functionality.

28. A method for wireless communication, comprising:
sending, by a network device, target information to a terminal device, wherein the target information is used to determine activation information of an artificial intelligence (AI) capability corresponding to a plurality of functionalities or activation information of a model corresponding to the plurality of functionalities.

29. The method of claim 28, wherein
the plurality of functionalities correspond to one AI capability or one model; or
the plurality of functionalities correspond to one AI capability or one model and each of the plurality of functionalities corresponds to one AI capability or one model.

30. The method of claim 28 or 29, wherein the target information comprises activation information of an AI capability or a model that is jointly indicated for the plurality of functionalities.

31. The method of any one of claims 28 to 30, wherein the plurality of functionalities correspond to one AI capability, the target information comprises first indication information, the first indication information being used to indicate whether to activate the one AI capability.

32. The method of claim 31, wherein the first indication information comprises identification information of each of the plurality of functionalities and a first activation indication, the first activation indication being used to indicate whether to activate the one AI capability.

33. The method of any one of claims 28 to 30, wherein the plurality of functionalities correspond to a plurality of candidate models, each of the plurality of candidate models is used to implement the plurality of functionalities, the target information comprises second indication information and/or third indication information, wherein the second indication information is used to indicate whether to activate an AI capability corresponding to the plurality of functionalities, and the third indication information is used to indicate activation of a target candidate model among the plurality of candidate models.

34. The method of claim 33, wherein the second indication information comprises identification information of each of the plurality of functionalities and a second activation indication, the second activation indication being used to indicate whether to activate the AI capability corresponding to the plurality of functionalities.

35. The method of claim 33 or 34, wherein the third indication information comprises a first model indication, the first model indication being used to indicate the target candidate model.

36. The method of claim 28, wherein the plurality of functionalities constitute a first functionality group,
wherein the first functionality group corresponds to one AI capability or one model, or
the first functionality group corresponds to one AI capability or one model and each of the plurality of functionalities corresponds to one AI capability or one model.

37. The method of claim 36, wherein the target information comprises activation information of an AI capability or a model corresponding to the first functionality group.

38. The method of claim 37, wherein the first functionality group corresponds to one AI capability, the target information comprises fourth indication information, the fourth indication information being used to indicate whether to activate the one AI capability for the first functionality group.

39. The method of claim 38, wherein the fourth indication information comprises identification information of the first functionality group and a third activation indication, the third activation indication being used to indicate whether to activate the corresponding AI capability for the first functionality group.

40. The method of claim 37, wherein the first functionality group corresponds to a plurality of candidate models, each of the plurality of candidate models is used to implement a group of the plurality of functionalities, the target information comprises fifth indication information and/or sixth indication information, wherein the fifth indication information is used to indicate whether to activate an AI capability for the first functionality group, and the sixth indication information is used to indicate activation of a target candidate model among the plurality of candidate models.

41. The method of claim 40, wherein the fifth indication information comprises identification information of the first functionality group and a fourth activation indication, the fourth activation indication being used to indicate whether to activate the AI capability for the first functionality group.

42. The method of claim 40 or 41, wherein the sixth indication information comprises identification information of the first functionality group and a second model indication, the second model indication being used to indicate the target candidate model.

43. The method of claim 28, wherein
each of the plurality of functionalities corresponds to one AI capability or one model; or
the plurality of functionalities correspond to one AI capability or one model; or
the plurality of functionalities correspond to one AI capability or one model and each of the plurality of functionalities corresponds to one AI capability or one model; or
the plurality of functionalities constitute a first functionality group, the first functionality group corresponds to one AI capability or one model, or the first functionality group corresponds to one AI capability or one model and each of the plurality of functionalities corresponds to one AI capability or one model.

44. The method of claim 43, further comprising:
sending, by the network device, ninth indication information to the terminal device, wherein the indication information is used to indicate a plurality of functionalities that are jointly activated.

45. The method of claim 44, wherein the ninth indication information is capable of comprising identification information corresponding to each of the plurality of functionalities.

46. The method of any one of claims 43 to 45, further comprising:
sending, by the network device, tenth indication information to the terminal device, wherein the tenth indication information is used to indicate an association relationship between models corresponding to a plurality of functionalities that are jointly activated.

47. The method of any one of claims 28 to 46, wherein the target information is carried by at least one of the following signaling: downlink control information (DCI), a media access control control element (MAC CE), a high-layer signaling, or application-layer control information.

48. The method of claim 47, wherein the target information is carried by the DCI,
wherein the DCI is in a first format, and/or the DCI is generated by a first radio network temporary identity (RNTI),
wherein the DCI in the first format is used to carry activation information of an AI capability or a model corresponding to a functionality, and the DCI generated by the first RNTI is used to carry activation information of an AI capability or a model corresponding to a functionality.

49. A terminal device, comprising:
a communication unit, configured to receive target information from a network device, wherein the target information is used to determine activation information of an artificial intelligence (AI) capability corresponding to a plurality of functionalities or activation information of a model corresponding to the plurality of functionalities.

50. A network device, comprising
a communication unit, configured to send target information to a terminal device, wherein the target information is used to determine activation information of an artificial intelligence (AI) capability corresponding to a plurality of functionalities or activation information of a model corresponding to the plurality of functionalities.

51. A terminal device, comprising: a processor and a memory, wherein the memory is configured to store a computer program, and the processor is configured to invoke and execute the computer program stored in the memory to perform the method of any one of claims 1 to 27.

52. A network device, comprising: a processor and a memory, wherein the memory is configured to store a computer program, and the processor is configured to invoke and execute the computer program stored in the memory to perform the method of any one of claims 28 to 48.

53. A chip, comprising a processor configured to invoke and execute a computer program from a memory, to cause a device on which the chip is mounted to perform the method of any one of claims 1 to 27 or the method of any one of claims 28 to 48.

54. A computer-readable storage medium for storing a computer program that causes a computer to perform the method of any one of claims 1 to 27 or the method of any one of claims 28 to 48.

55. A computer program product comprising computer program instructions that cause a computer to perform the method of any one of claims 1 to 27 or the method of any one of claims 28 to 48.

56. A computer program that causes a computer to perform the method of any one of claims 1 to 27 or the method of any one of claims 28 to 48.
